# EUROPEAN PATENT APPLICATION

(11) **EP 4 339 100 A1**
(43) Date of publication of application: **20.03.2024**
(21) Application number: 22807298.9
(22) Date of filing: 13.04.2022
(51) Int. Cl.: B64C 39/02

(54) **POSITION RESTRICTION DEVICE, LOAD RECEIVING SYSTEM, AND METHOD FOR MOVING CARGO**

(30) Priority: 12.05.2021 WO PCT/JP2021/018018
(71) Applicant: Aeronext Inc., Shibuya-ku Tokyo 1500021 (JP)
(72) Inventor: SUZUKI, Yoichi, Tokyo 150-0021 (JP)
(74) Representative: Herrero & Asociados, S.L.
(86) International application number: PCT/JP2022/017692
(87) International publication number: WO 2022/239595

(57) **Abstract**

[Problem to be solved] To provide a position restriction device for a suspension member that can improve the position accuracy of a flight body by a simple mechanism. [Solution] The present disclosure is a position restriction device for a suspension member suspended from a flight body, comprising a restriction part for restricting the movement of the position of the suspension member, and a guide part for guiding the suspension member to a position where the movement of the suspension member can be restricted by the restriction part at least.

## Description

### [TECHNICAL FIELD]

The present disclosure relates to a position restriction device, a load receiving system, and a method of moving a load.

### [BACKGROUND ART]

In recent years, the practical application of home delivery services using flight bodies such as drones and unmanned aerial vehicles (UAVs; hereinafter collectively referred to as "flight bodies") has been promoted. Flight bodies equipped with multiple propellers, commonly called multicopters (hereinafter collectively referred to as "multicopters"), do not require a runway for takeoff and landing like ordinary fixed-wing aircraft, which allows them to operate in relatively small areas, making them suitable for providing transportation services such as home delivery.

In transportation by flight body, it is known that when detaching a load from a flight body, the flight body lands at a port or other location, and the load is released from its hold on the spot, or a person removes the load.

However, it is known that the landing operation of a flight body is more likely to cause the flight body to become unstable than the cruising operation, etc. In addition, a person needs to approach and contact the airframe in order to remove loads. In view of this situation, Patent Literature 1 discloses a luggage delivery system using a flight body, in which luggage is suspended from the flight body and lowered, so that the luggage can be detached without the flight body having to land (see, for example, Patent Literature 1).

### [PRIOT ART LIST]

### [Patent Literature]

[Patent Literature 1] US20200207474A1

### [SUMMARY OF THE INVENTION]

### [TECHNICAL PROBLEM]

Patent Literature 1 discloses a system for delivery of loads by a flight body, in which the flight body is connected to the load with a cable, the cable is unloaded by unrolling the load toward the ground, and the load is automatically released from the cable when the load reaches the ground.

When unloading a load by suspending it from a flight body in the sky, it is sometimes difficult to improve the positioning accuracy of the load. For example, environmental winds and the movement of the flight body may cause the load suspended from the cable to sway and shift its position in some cases. In addition, when GNSS is used to control the position of the flight body, the position accuracy may vary depending on the satellite supplementation status.

When loads are to be cut off at large ports or on the ground, misalignment of loads is unlikely to be a problem. However, when loads are to be landed on narrow land or compact ports, improved accuracy in the positioning of loads is desired.

### [ADVANTAGEOUS EFFECTS]

One purpose of the present disclosure is to provide a position restriction device for suspension members that can improve the positional accuracy of a flight body with a simple mechanism.

### [TECHNICAL SOLUTION]

According to the present disclosure, a position restriction device for a suspension member suspended from a flight body, comprising: a restriction member for restricting the moving position of the suspension member; and a guide part for guiding the suspension member to a position where the suspension member can be restricted from moving at least by the restriction member.

Also according to the present disclosure, there is provided a load receiving system, comprising: a load receiving device; and a flight body that delivers a load, wherein the load receiving device has a restricting part, wherein the flight body has a restricted part, wherein the restricting part is provided to be able to fix the restricted part, and wherein the flight body is restricted from moving objects when the restricting part is secured to the restricted part.

Also according to the present disclosure, there is provided a method for moving a cargo/load, wherein the load to be delivered by a flight body is received by a load receiving device, wherein the load receiving device is provided with a restricting part, wherein the flight body is provided with a restricted part that can be physically secured by the restricting part, and the method, comprising: a step of hovering the flight body carrying the load in the vicinity of the load receiving device; a step of restricting the moving object of said flight body by said restricting part fixing said restricting part; a step wherein the flight body detaches the load and the load moves to the load receiving device; and a step of releasing the restricting part from fixing the restricted part.

### [ADVANTAGEOUS EFFECTS]

According to the present disclosure, a position restriction device for a suspension member that can improve the positional accuracy of a flight body can be provided.

### [BRIEF DESCRIPTION OF THE DRAWINGS]

FIG. 1 shows a schematic view of the position restriction device according to the present disclosure, viewed from the side.
FIG. 2 shows a view of the position restriction device of FIG. 1 in use.
FIG. 3 shows a schematic view of the position restriction device of FIG. 1 from the top.
FIG. 4 shows a schematic view of the position restriction device of FIG. 2 from the top.
FIG. 5 shows a view of the position restriction device of FIG. 4 when it performs position restriction.
FIG. 6 shows an example of the shape of the position restriction device according to the present disclosure.
FIG. 7 shows a diagram of the position restriction device of FIG. 6 performing position restriction.
FIG. 8 shows another example of the shape of the position restriction device according to the present disclosure.
FIG. 9 shows another example of the shape of a position restriction device according to the present disclosure.
FIG. 10 shows another example of the shape of a position restriction device according to the present disclosure.
FIG. 11 shows a diagram of the position restriction device of FIG. 10 performing position restriction.
FIG. 12 shows a side view of a flight body that can be used in combination with the present disclosure.
FIG. 13 shows a top view of the flight body of FIG. 12.
FIG. 14 shows a functional block diagram of the flight body of FIG. 1.
FIG. 15 shows a side view of a flight body comprising a suspension member connected to the flight body.
FIG. 16 shows a view of the suspension member of FIG. 15 when it is unfolded.
FIG. 17 shows another view of the suspension member of FIG. 15 when it is ejected.
FIG. 18 shows a side view of an example of a suspension connected to a flight body.
FIG. 19 shows a side view of an example of a suspension connected to a flight body.
FIG. 20 shows the suspension member of FIG. 19 when it is rotated.
FIG. 21 shows a side view of an example of a suspension member connected to a flight body.
FIG. 22 shows a schematic diagram of a position restriction device according to the present disclosure, viewed from the side.
FIG. 23 shows a view of the position restriction device of FIG. 22 in use.
FIG. 24 shows a top view of the position restriction device of FIG. 22.
FIG. 25 shows the position restriction device of FIG. 23, viewed from the top.
FIG. 26 shows a view of the position restriction device of FIG. 25 when it performs position restriction.
FIG. 27 shows a side view of an example configuration of a position restriction device according to the present disclosure.
FIG. 28 shows a front view of the position restriction device of FIG. 27.
FIG. 29 shows a view of the position restriction device of FIG. 28 in operation.
FIG. 30 shows a side view of an example configuration of a position restriction device according to the present disclosure.
FIG. 31 shows a view of the position restriction device of FIG. 30 in operation.
FIG. 32 shows a side view of an example configuration of a position restriction device according to the present disclosure.
FIG. 33 shows the flight body of FIG. 32 when it is loaded with a payload.
FIG. 34 shows a view when the position restriction device of FIG. 32 releases the flight body.
FIG. 35 shows a view when the flight body of FIG. 32 winds up the suspension member.
FIG. 36 shows when the position restriction device of FIG. 35 releases the flight body.
FIG. 37 shows a side view of an example configuration of a position restriction device according to the present disclosure.
FIG. 38 shows a top view of the position restriction device of FIG. 27.
FIG. 39 shows a view of the position restriction device of FIG. 28 when it is stored in a structure.
FIG. 40 shows a side view of an example configuration of a position restriction device according to the present disclosure.
FIG. 41 shows a top view of the position restriction device of FIG. 30.
FIG. 42 shows a view of the position restriction device of FIG. 31 when it is stored in a structure.
FIG. 43 shows a side view of the position restriction device according to the present disclosure when the flight body is released.
FIG. 44 shows a schematic diagram of a cargo/load receiving system according to the present disclosure, viewed from the side.
FIG. 45 shows another schematic view of a cargo receiving system according to the present disclosure, viewed from the side.
FIG. 46 shows another schematic diagram of a cargo receiving system according to the present disclosure, viewed from the side.
FIG. 47 shows a schematic diagram of a load receiving device and a restricted part according to the present disclosure, viewed from the top.
FIG. 48 shows a view of the cargo/load receiving system of FIG. 47 in use.
FIG. 49 shows a side view of a flight body used for the cargo receiving system according to the present disclosure.
FIG. 50 shows a view of the flight body shown in FIG. 7 when moving forward.

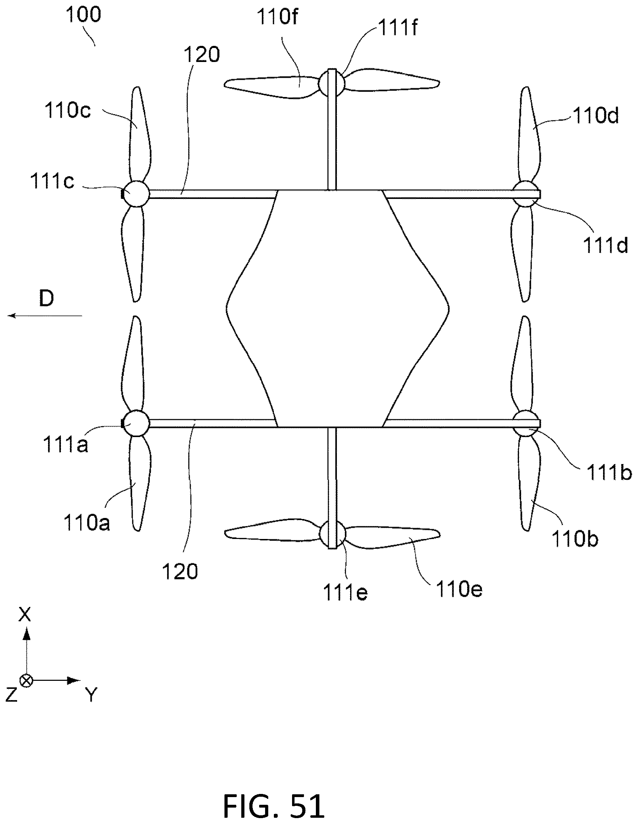

FIG. 51 shows a top view of the flight body shown in FIG. 7.
FIG. 52 shows a schematic view of a load receiving device and the restricted part according to the present disclosure, viewed from the top.
FIG. 53 shows a view of the cargo receiving system of FIG. 46 in use.
FIG. 54 shows a schematic diagram of a load receiving device and a restricted part according to the present disclosure, viewed from the top.
FIG. 55 shows a diagram of the cargo receiving system of FIG. 46 in use.
FIG. 56 shows a diagram of the cargo receiving system of FIG. 46 in use.
FIG. 57 shows a schematic view of the load receiving device and the restricted part according to the present disclosure, viewed from the top.
FIG. 58 shows a diagram of the cargo receiving system of FIG. 46 in use.
FIG. 59 shows a diagram of the cargo receiving system of FIG. 46 in use.
FIG. 60 shows a schematic diagram of a cargo receiving system according to the present disclosure, viewed from the side.
FIG. 61 shows the flight body of FIG. 49 when the winch is activated.
FIG. 62 shows the flight body of FIG. 49 when its moving object is restricted by the cargo receiving system.
FIG. 63 shows when the cargo receiving system of FIG. 49 completes the delivery of the load.
FIG. 64 shows when the cargo receiving system of FIG. 49 has lowered a load.
FIG. 65 shows a schematic diagram of a side view of a cargo receiving system in which the cargo receiving system is connected to the roof of a building.

### [EMBODIMENT OF THE INVENTION]

The contents of this embodiment of the present disclosure are described in a list. The position restriction device for a suspension member according to this embodiment of the disclosure consists of the following.

### [Item 1]

A position restriction device for a suspension member suspended from a flight body, comprising:
a restricting member for restricting the movement of the suspended member;
a guide part for guiding the suspended member to a position at least where the movement of the suspended member can be restricted by the restricting member.

### [Item 2]

The position restriction device according to item 1, further comprising:
a load receiving part below the restricting member for receiving a load connected to the suspension part.

### [Item 3]

The position restriction device as in item 1 or item 2,
wherein the restricting member includes a member that grips the suspension member.

### [Item 4]

The position restriction device of any one of items 1 to 3,
wherein the restricting member includes a roller portion that moves the suspension member by rotation.

### [Item 5]

The position restriction device of any one of items 1 to 4,
wherein the restricting member includes a configuration to keep the suspension member within a predetermined enclosed space.

### [Item 6]

The position restriction device of any one of items 1 to 5,
wherein the restricting member is provided below the guide portion.

### [Item 7]

The position restriction device as in any one of items 1 to 6,
wherein the restricting member and the guide part are moveable in at least a horizontal direction.

### [Item 8]

The position restriction device according to item 7,
wherein the position restriction device is provided on a structure,
wherein the position restriction device is moved horizontally such that at least a portion of the position restriction device is concealed by the structure.

### [Item 9]

The position restriction device as in any one of items 1 to 8.
wherein the restricting member and the guide portion are movable at least vertically.

### [Item 10]

The position restriction device according to item 9,
wherein the position restriction device includes an arm part,
wherein the arm part is movable at least vertically by movement of the arm part.

### [Item 11]

A load receiving system, comprising:
a load receiving device and a flight body for delivering loads,
wherein the load receiving device has a restricting part and the flight body has a restricted part,
wherein the restricting part is provided so that the restricted part can be fixed, and the flight body's movement is restricted when the restricting part is in a state where the restricting part fixes the restricted part.

### [Item 12]

The load receiving system according to item 11,
wherein, in a state in which the restricting part secures the restricted part,
detachment of the load by the flight body is performed.

### [Item 13]

The load receiving system as in item 11 or 12,
wherein the flight body is provided with a propeller and a motor for rotating the propeller,
wherein the motor provided by the flight body does not stop rotating in a state in which the movement of the restricted part is restricted by the restricting part.

### [Item 14]

The load receiving system as in any one of items 11 to 13,
wherein the load is connected to the lower end of the restricted part.

### [Item 15]

The load receiving system as in any one of items 11-14, wherein the restricted part is a string-like member.

### [Item 16]

The load receiving system according to item 15,
wherein the flight body is further provided with a winch for adjusting the suspension length of the restricted part.

### [Item 17]

The load receiving system as in any one of items 11 to 14,
wherein the restricted part is a bar-shaped member.

### [Item 18]

The load receiving system as in any one of items 11 to 17,
wherein the structure on which the load receiving system is installed is a roof of a building.

### [Item 19]

The load receiving system of any one of items 11 or 18, further comprising:
a lifting device to transport the load received from the flight body.

### [Item 20]

A method of moving objects wherein a load delivered by a flight body is received by a load receiving device,
wherein the load receiving device is provided with a restricting part,
wherein the flight body is provided with a restricted part that can be physically secured by the restricting part, comprising:
   a step in that the flight body carrying the load hovering near the load receiving device;
   a step of restricting the flight body's movement by the restricting part fixing the restricted part;
   a step of the flight body detaching the load and moving the load to the load receiving device; and
   a step of releasing the restricted portion from securing the restricted portion.

### <Details of embodiments according to this disclosure>

The position restriction device according to this embodiment of this disclosure is described below with reference to the drawings.

### <Details of the first embodiment>

The position restriction device 30 has a restricting member 32 that limits the amount of movement of a cable, wire, string, rod, or other member (hereinafter collectively referred to as the suspension member 10) suspended from the flight body 100.

By limiting the amount and direction of movement of the suspension member 10 by the movement of the restricting member 32, even if the wind blows or the position of the flying body shifts, the suspension member 10 below the restricted position and the flying body 100 or the load 11 connected to the suspension member are restricted from moving, thus reducing the shift in the position of each part. For example, if the load 11 is a package to be delivered, it is easy to detach the package to a compact port or other location without the flight body landing. Also, when the flying body performs a landing, the descent and landing operations are performed with the movable range restricted, so that the safety of the surrounding area can be expected to be secured even when the flying body becomes unstable.

The components of the position restriction device 30, including the guide part 31 and restricting member 32, should be constructed using materials that provide strength and rigidity, such as metal, resin, FRP, etc., that can withstand the pull caused by the movement of the flying object 100. The load capacity may be greater than the total weight of the flight body to prevent separation or crash of the flight body 100 in the event that the flight body 100 runs out of control or becomes unflyable.

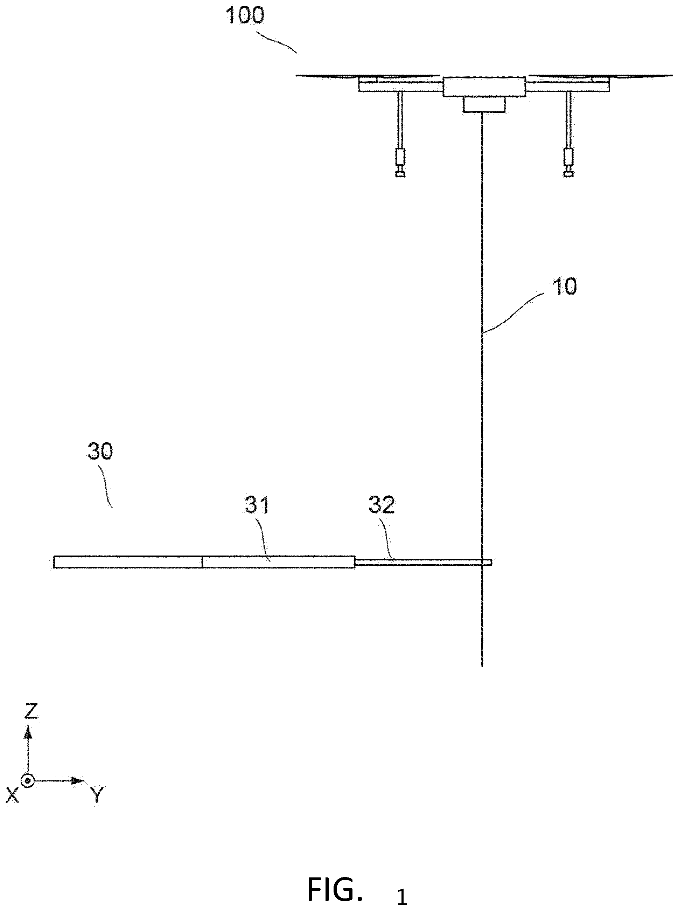

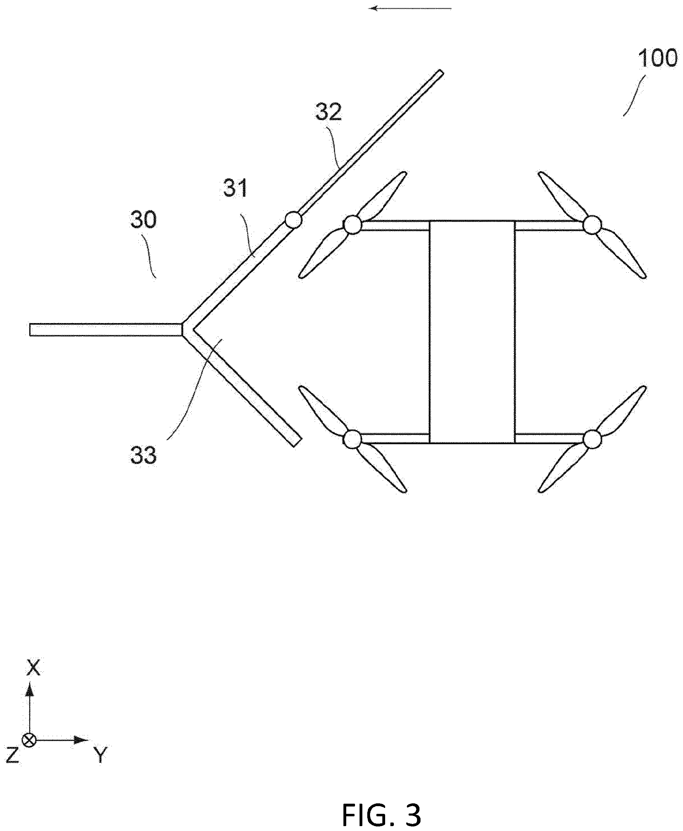

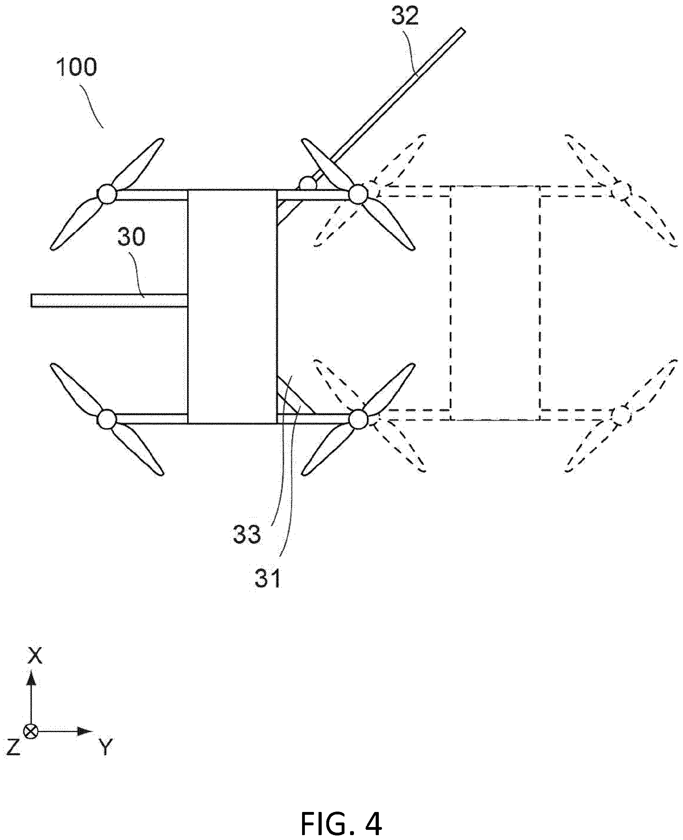

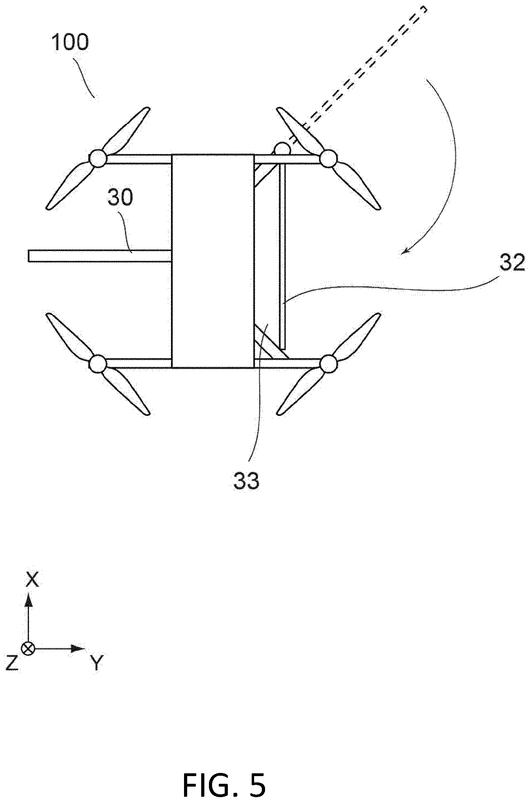

The position restriction device 30 should be provided with a guide part 31, as illustrated in FIG. 1-5, to guide the suspension member 10 to a position where the position restriction by the restricting member 32 can easily enter and exit. The enclosed space 33, which is at least partially surrounded by the guide part 31 and provided with an opening part into which the suspension member 10 can enter and exit, can also be used as a space to hold the suspension member 10 by operation of the restricting member 32. The restricting member 32 may be combined with a configuration for restricting the movement of the suspension member 10 by directly gripping the suspension member 10, etc., as will be described later. The movement may be roughly restricted by the first step of holding the suspension member 10 within the enclosed space 33 by operation of the first restricting member illustrated in FIG. 4 and FIG. 5, and more precisely restricted by the second step by the second restricting member that restricts movement by directly gripping the suspension member 10, as described below.

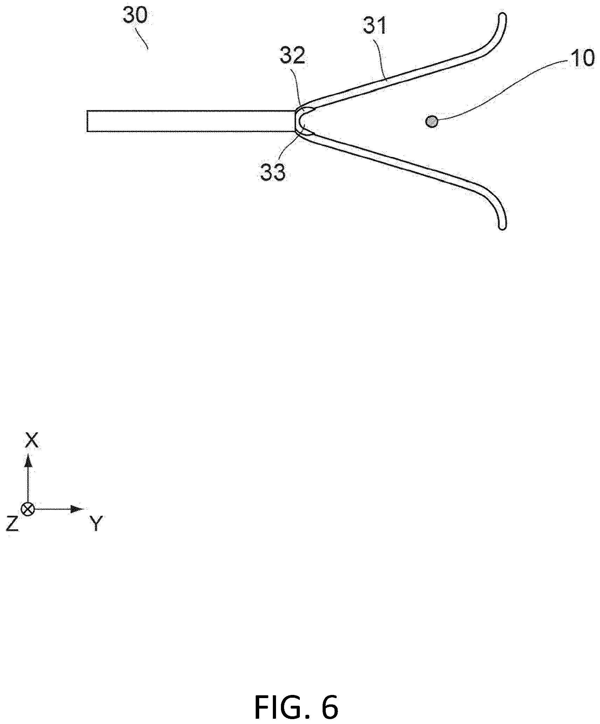

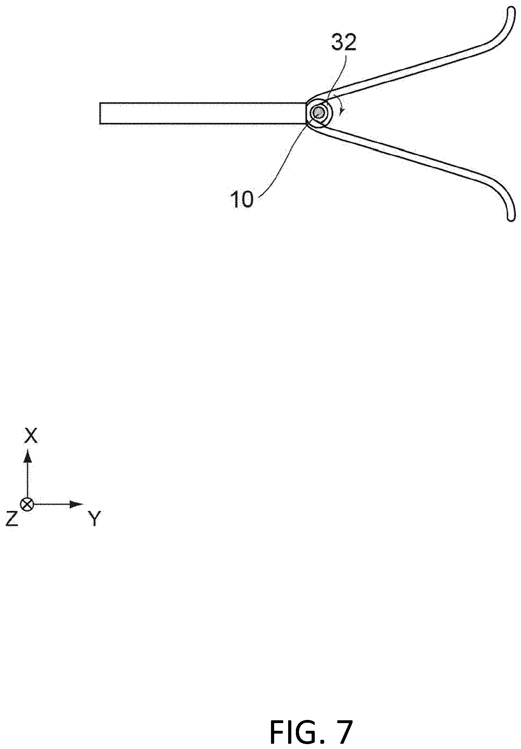

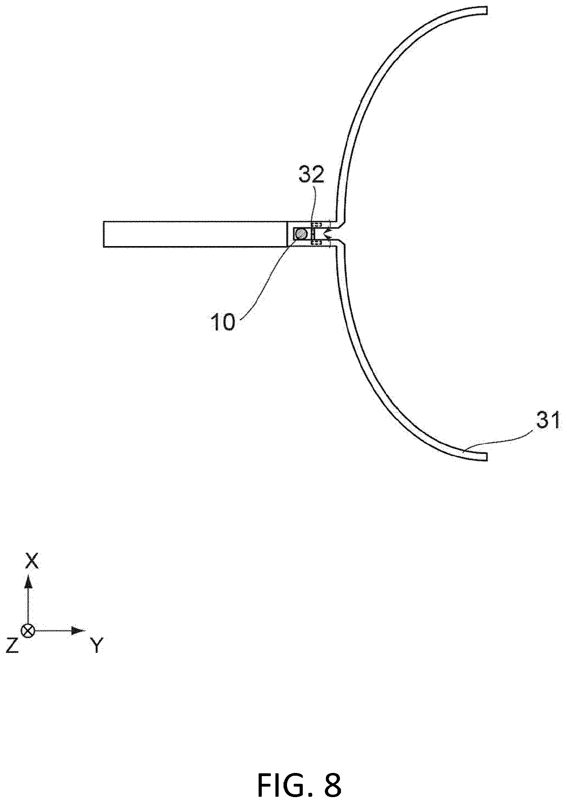

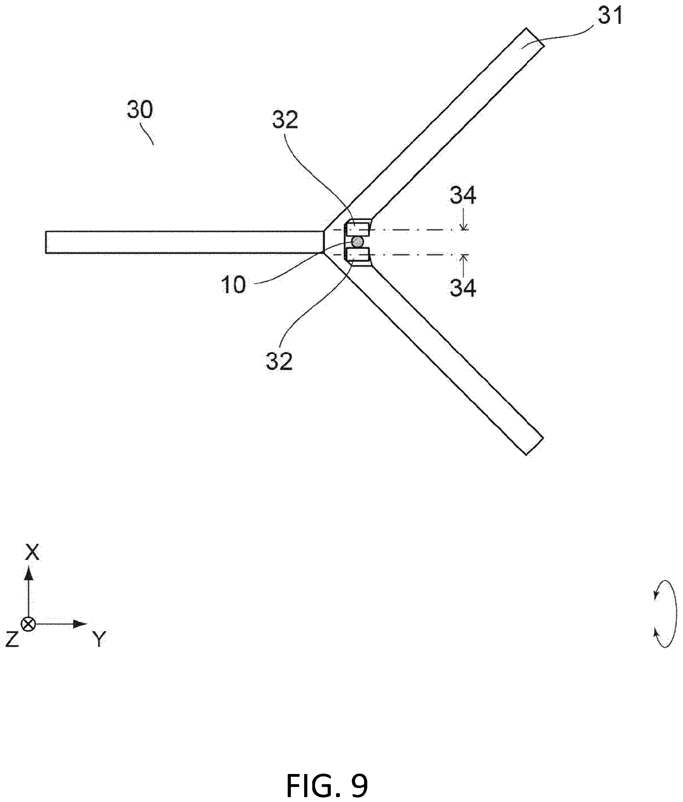

For example, as illustrated in FIG. 4 and FIG. 5, the movement in the X and Y directions is restricted by blocking the entry port with the restricting member 32 as a bendable or other movable member. As illustrated in FIG. 6 - FIG. 8, the movement in the X and Y directions can be further restricted by making the movable range of the suspension member 10 narrower. The restricting member 32 shown in FIG. 6 and FIG. 7 is in the form of a ring lock, which limits the position of the suspension member 10 by rotating a bolt when the suspension member 10 enters a predetermined position. The restricting member 32 shown in FIG. 8 is retracted with their tips pointing in the +Y direction when not in use, and each turns inward to restrict the position of the suspension member 10 when the suspension 10 enters a predetermined position. When the restricting member 32 grips the suspension member 10 as shown in FIG. 9 - FIG. 11, it can also restrict movement in all directions (X, Y, and Z).

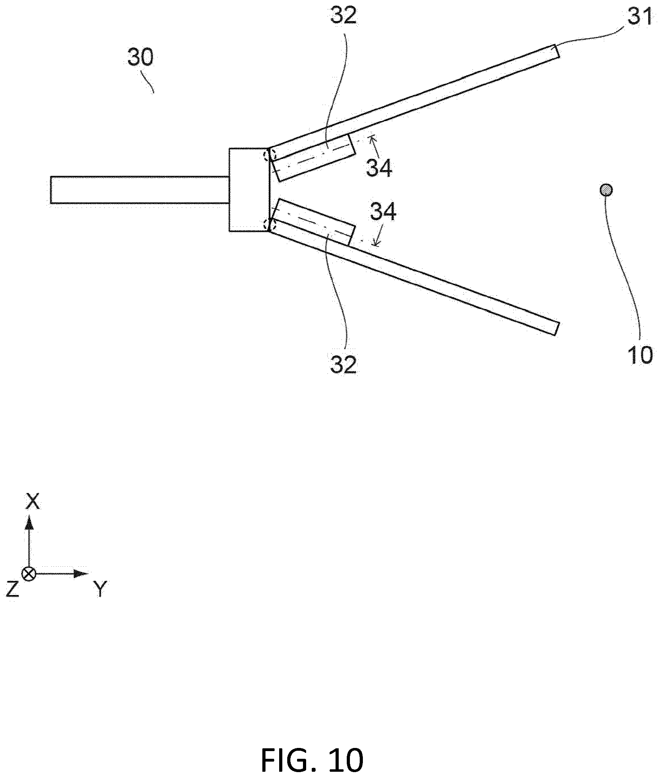

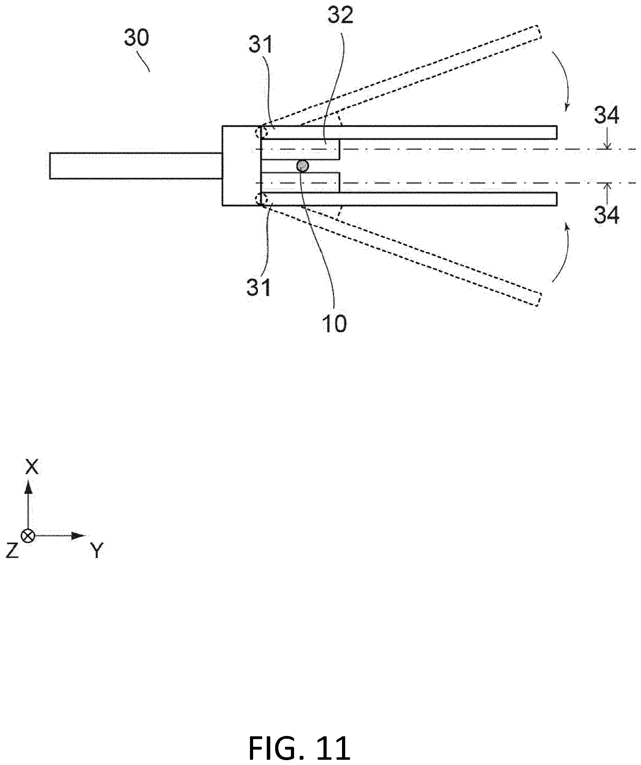

In the position restriction device 30 illustrated in FIG. 9, the restricting member 32 may simply be a gripping part that grips the suspension 10, or it may be, for example, a roller part of a winder. After the suspension 10 enters, the roller part rotates around a rotary axis 34 to enable descent. Reversing the direction of rotation also enables ascent. In the position restriction device 30 illustrated in FIG. 10 and FIG. 11, when the suspension member 10 is positioned within a predetermined range (here, the range estimated to be affected by the rotation of the roller part, which has rotated to the position shown in FIG. 11), the guide 31 and restricting member 32 rotate, pinching the suspension member 10, and then the roller part turns. This allows the suspension to be raised and lowered. The restricting member 32 should be effective in restricting the amount of movement of the suspension member 10, and the method of restriction is not limited to the above example.

When the position restriction device 30 is equipped with a roller part of a winder as the restricting member 32, the winder 14 equipped with the flight body 100 unrolls and winds up the suspension member 10 in accordance with the direction and speed of rotation of the roller part. As a result, the Z-directional position of the suspension member 10 and the load 11 changes without any change in the Z-directional position of the flight body. If the roller part of the winder equipped with the position restriction device 30 rotates, but the winder 14 equipped with the flight body 100 does not operate, the position of the flight body 100 in the Z-direction changes. By controlling the method and timing in which the motions of the winder provided by the position restriction device 30 and the winder 14 provided by the flight body 100 operate, it is possible to control the amount and speed of the flight body 100 and the load 11 in the Z-direction.

The restricting member 32 may be equipped with a sensor (e.g., optical, pressure-sensitive, or infrared sensor) or physical trigger (e.g., cable, wire, or latch) that senses that the suspension member 10 has entered a predetermined position. The restricting member 32 may be operated based on the information input to the sensor. For example, the sensor senses that the suspension member 10 shown in FIG. 6 has moved to the position shown in FIG. 7, which causes the restricting member 32 to operate and limit the position of the suspension member 10.

As shown in FIG. 1 - FIG. 5, the position restriction device 30 according to this embodiment of the disclosure can be used in combination with a flight body 100. In the following description, a multicopter is used as an example of a flight body used in combination with the position restriction device 30 according to this embodiment, but the form and operation of the flight body is not limited in the implementation of this disclosure. For example, it goes without saying that the device can also be used in combination in fixed-wing aircraft, VTOL aircraft, helicopters, and the like.

The flight body 100 performs takeoff from the takeoff point and flies to the destination. For example, when the flight body makes a delivery, the flight body reaches the destination and completes the delivery by landing or detaching the load at a port or other location. After detaching the load, the flight body 100 heads to another destination.

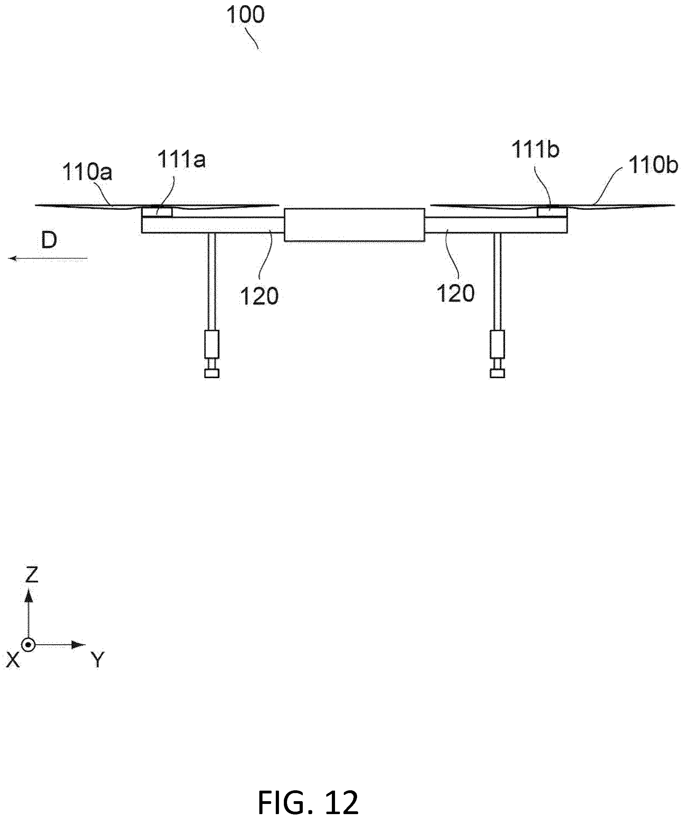

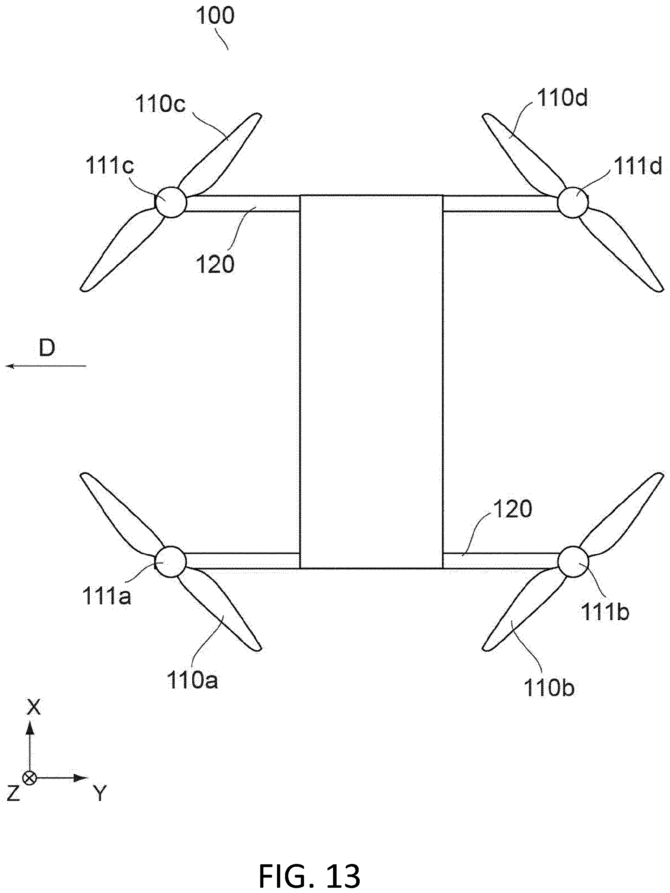

As shown in FIGs. 12 and 13, the flight body 100 according to this embodiment is equipped with a flight part that includes at least a main body part, a plurality of rotary wing parts comprising a propeller 110 and a motor 111, a motor mount and a frame 120 that support the rotary wing parts, and other elements to perform the flight. It should also be equipped with energy (e.g., secondary batteries, fuel cells, fossil fuels, etc.) to operate them.

The flight body 100 shown in the figures is depicted in simplified form to facilitate the description of the structure of the present disclosure, and detailed components such as the control part, for example, are not shown in the figures.

The flight body 100 is moving forward in the direction of arrow D (-Y direction) in FIG. (see below for details).

In the following explanation, the terms may be used differently according to the following definitions. Forward/backward: +Y and -Y, up/down (or vertical): +Z and -Z, left/right (or horizontal): +X and -X, forward direction (forward): -Y, backward direction (backward): +Y, ascending direction (upward): +Z , descending direction (downward): -Z.

The propeller 110 rotates upon receiving an output from the motor 111. The rotation of the propeller 110 generates propulsive force to take the flight body 100 off from the starting point, moving the body, and landing at the destination. The propeller 110 can rotate to the right, stop, and rotate to the left.

The propeller 110 provided by the flight body of the present disclosure has one or more blades. The number of blades (rotors) can be any (e.g., one, two, three, four, or more blades). The shape of the blades can be any shape, such as flat, curved, kinked, tapered, or a combination thereof. The shape of the blades can be changeable (e.g., stretched, folded, bent, etc.). The blades can be symmetrical (having identical upper and lower surfaces) or asymmetrical (having differently shaped upper and lower surfaces). The blades can be formed into airfoils, wings, or any geometry suitable for generating dynamic aerodynamic forces (e.g., lift, thrust) when the blades are moved through the air. The geometry of the vane can be selected as appropriate to optimize the dynamic aerodynamic characteristics of the vane, such as increasing lift and thrust and reducing drag.

The propeller equipped with the flight body of the present disclosure may be, but is not limited to, fixed pitch, variable pitch, or a mixture of fixed and variable pitch.

The motor 111 produces rotation of the propeller 110; for example, a drive unit can include an electric motor or engine. The blades can be driven by the motor and rotate around the axis of rotation of the motor (e.g., the long axis of the motor).

The blades can all rotate in the same direction or can rotate independently. Some of the blades rotate in one direction while others rotate in the other direction. The blades can all rotate at the same RPM, or they can each rotate at a different RPM. The number of rotations can be determined automatically or manually based on the dimensions of the moving object (e.g., size, weight) and control conditions (speed, direction of movement, etc.).

The flight body 100 determines the number of revolutions of each motor and the angle of flight according to the wind speed and direction by means of the flight controller 1001, ESC 112, and transceiver/transreceiver (radio) 1006. This allows the flight body to perform moving such as ascending and descending, accelerating and decelerating, and changing direction.

The flight body 100 can fly autonomously according to routes and rules set in advance or during the flight, or by using the transceiver (radio) 1006 to control the flight body.

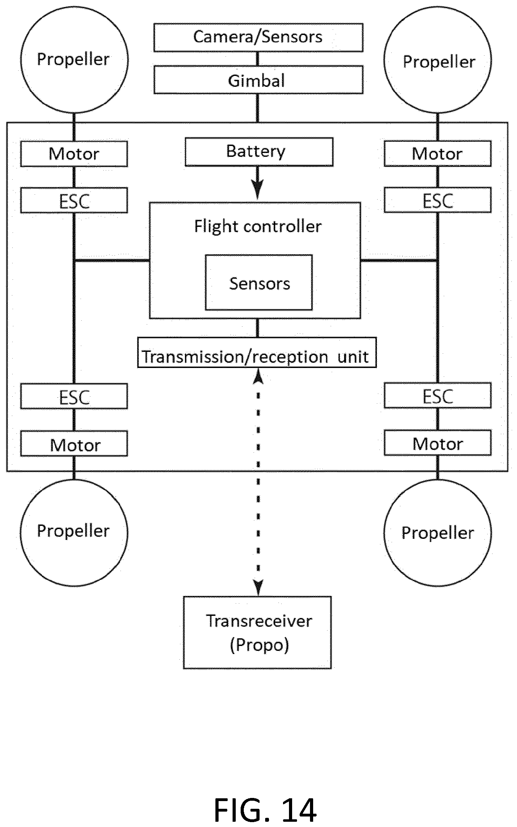

The flight body 100 described above has the functional blocks shown in FIG. 14. The functional block in FIG. 14 is an example of a minimum reference configuration. The flight controller 1001 is a so-called processing unit. The processing unit can have one or more processors, such as a programmable processor (e.g., a central processing unit (CPU)). The processing unit has a memory, not shown, which is accessible. The memory stores logic, code, and/or program instructions that can be executed by the processing unit to perform one or more steps. The memory may include, for example, a separable medium such as an SD card or random access memory (RAM) or an external storage device. Data acquired from sensors 1002 may be directly transmitted to and stored in the memory. For example, still and video data captured by a camera or other device is recorded in the internal or external memory.

The processing unit includes a control module comprising to control the state of the rotorcraft. For example, the control module controls the propulsion mechanism (e.g., motor) of the rotorcraft to adjust the spatial arrangement, speed, and/or acceleration of the rotorcraft having six degrees of freedom (translational motion x, y and z, and rotational motion θx, θy and θz). The control module can control one or more of the states of the mounting, sensors, etc.

The processing unit is capable of communicating with a transmission/reception part 1005 comprising one or more external devices (e.g., a terminal, display, or other remote controller) to transmit and/or receive data. The transmitter/receiver 1006 can use any suitable means of communication, such as wired or wireless communication. For example, the transmission/reception part 1005 can use one or more of local area network (LAN), wide area network (WAN), infrared, wireless, WiFi, point-to-point (P2P) network, telecommunication network, cloud communication, etc. The transmission/reception part 1005 can transmit and/or receive one or more of the following: data acquired by the sensors 1002, processed results generated by the processing unit, predetermined control data, and user commands from a terminal or remote controller.

Sensors or the likes 1002 in this embodiment can include inertial sensors (accelerometers, gyroscopes), GPS sensors, proximity sensors (e.g., lidar), or vision/image sensors (e.g., cameras).

The plane of rotation of the propeller 110 equipped with the flight body 100 in this embodiment tilts forward at an angle toward the direction of travel when the flight body 100 is moving forward. The forward inclined rotating surface of the propeller 110 generates upward lift and thrust in the direction of travel, which propels the flight body 100.

The flight body 100 may be equipped with a main body part that can contain a processing unit, battery, and other components to be mounted on the flight body 100 in the flight part, which is equipped with a motor, propeller, frame, and other components to generate lift and thrust. The main body part can optimize the shape of the flight body 100 in the attitude of the flight body 100 during cruising, which is expected to be maintained for a long time during the movement of the flight body 100, and increase the flight speed, thereby efficiently reducing the flight time.

The main body part should have an outer skin that is strong enough to withstand flight, takeoff and landing. For example, plastic and FRP are suitable materials for the outer skin because of their rigidity and water resistance. These materials may be the same material as the frame 120 (including arms) included in the flight part, or they may be different materials.

The motor mount, frame 120, and main body part provided by the flight part may be comprised by connecting the parts together or by using a monocoque structure or integral molding. (For example, the motor mount and frame 120 can be molded as one piece, or the motor mount, frame 120, and main body part can all be molded as one piece, etc.). By integrating the parts as one piece, the joints between each part can be made smooth, which is expected to reduce drag and improve fuel efficiency of flight bodies such as blended wing bodies and lifting bodies.

The shape of the flight body 100 may be directional. For example, the flight body 100 may have a streamlined main body part that has less drag in a cruising attitude in no wind, or other shapes that improve flight efficiency when the nose of the flight body is facing directly into the wind.

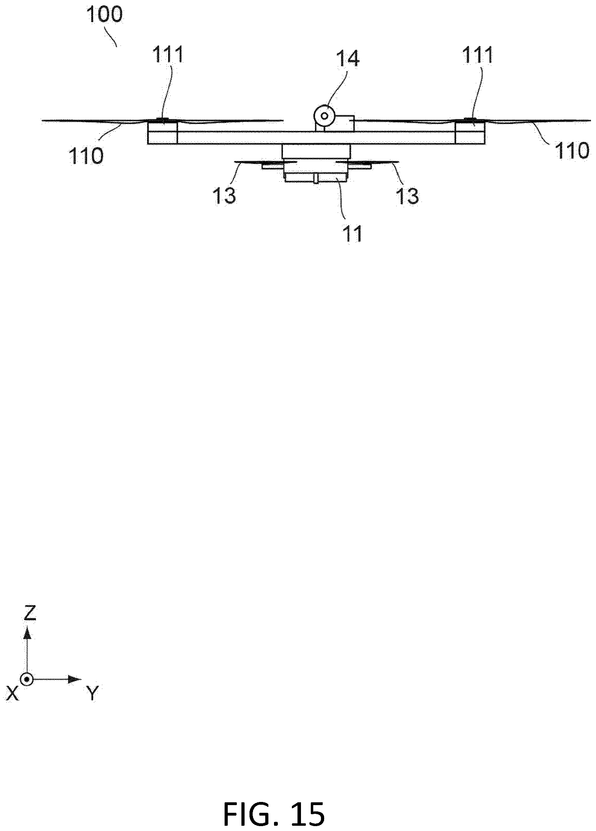

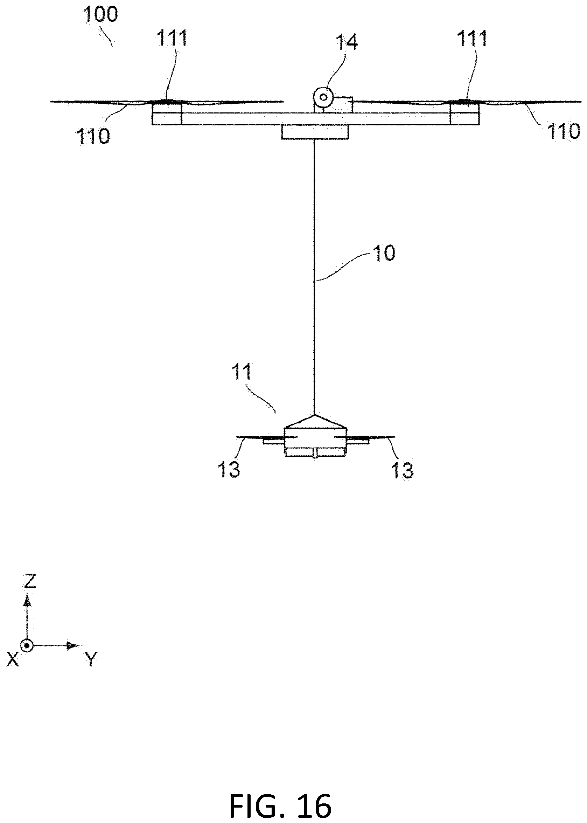

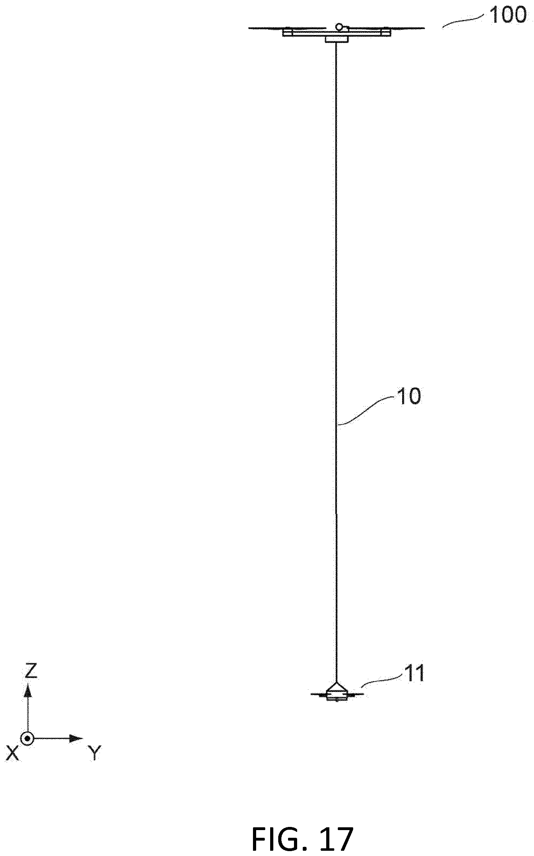

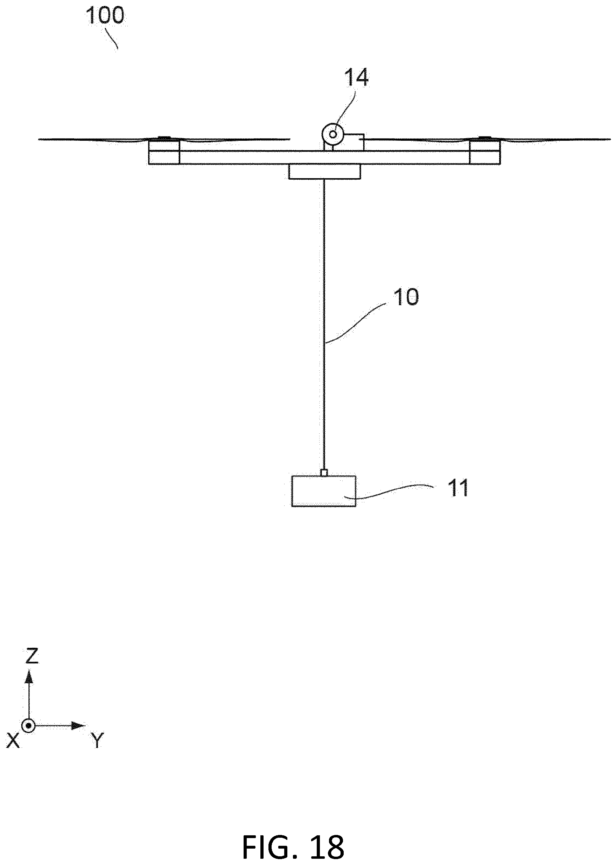

As illustrated in FIG. 15 - FIG. 18, the suspension member 10 connected to the flight body 100 may connect the load 11, including the load to be transported, a case containing the load, a camera or sound-sensing equipment for photographing or inspecting, sensors, grain spraying equipment, liquid spraying equipment, inspection equipment, an action part that performs a predetermined task, etc., at an end different from the end connected to the flight body 100. The suspension member 10 and the load 11 may be connected in a way that allows for automatic or manual disconnection.

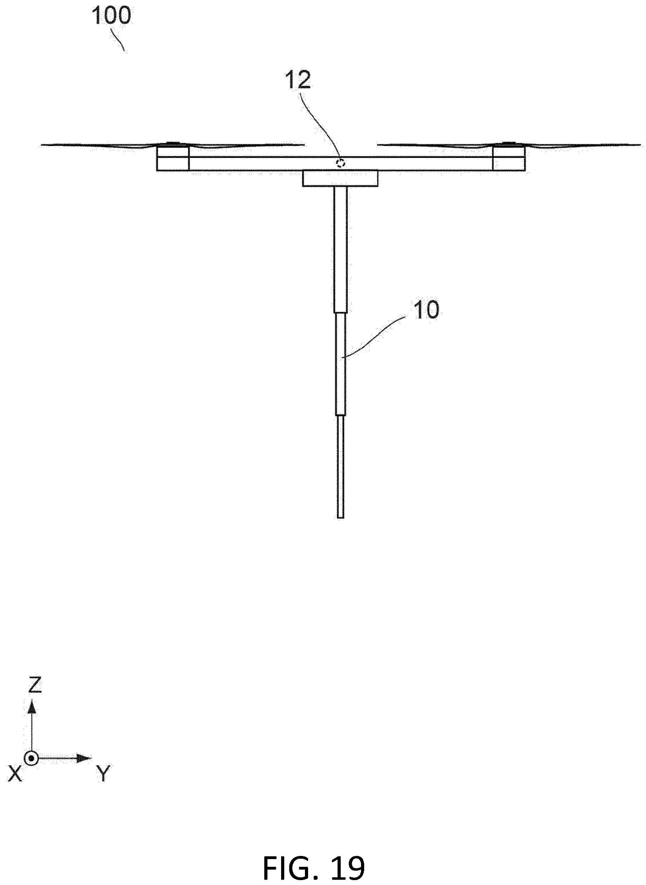

When the suspension member 10 comprises a material that is easy to wind onto a spool, such as a cable, wire, chain, or string, it can be unwound or hoisted using a winch, hoist, or other winder 14, as illustrated in FIG. 15 - FIG. 18. When the suspension member 10 comprises a material that is difficult to wind onto a spool, such as a rod, as illustrated in FIG. 19, the increase in size and weight is greater than for a cable or other material of equivalent length. However, since the suspension member 10 is less flexible than a cable, etc., the wind-induced oscillation of the suspension member 10 can be expected to be reduced.

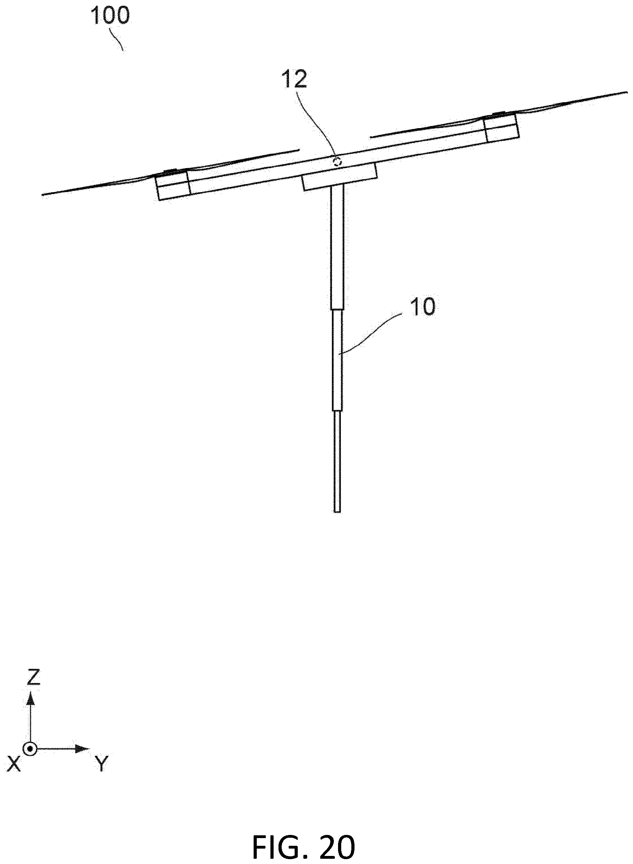

As illustrated in FIG. 19 and FIG. 20, the flight body 100 and the suspension member 10 may be connected independently and displaceably via the rotating axis 12. In particular, the lower part of the suspension member 10, which is less flexible, such as a rod, may sway significantly due to the swaying of the flight body when it is connected to the flight body in a nondisplaceable manner. By using an independent, displaceable connection, the suspension members can maintain a predetermined posture regardless of the inclination of the flight body, facilitating entry into the position restriction device and also maintaining the posture of the connected loads. For example, when equipped with the rotating axis 12 that rotates in the pitch direction, it is possible to cancel the forward leaning posture when the flight body is moving forward. If the suspension member 10 is made of a flexible material such as a cable, the rotating axis may be unnecessary because it will bend according to gravity when it contacts one of the components provided by the flight body.

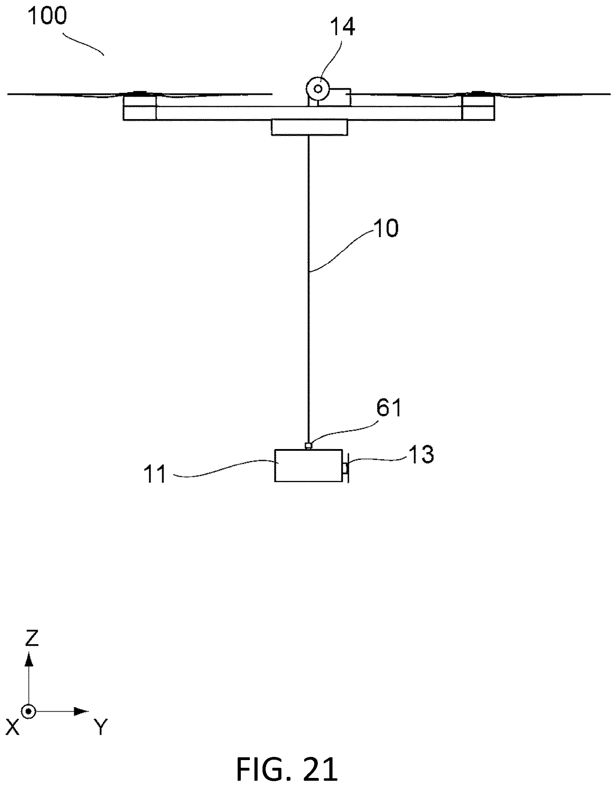

The load 11 connected to the suspension member 10 may be equipped with suspension movement means 13 (e.g., propellers, air blowers, etc.). The suspension member 10 and the load 11 can be moved independently of the movement of the flight body 100 by the suspension movement means 13. The suspension movement means 13 may be provided in only one direction with respect to the laod 11, but may also be provided in at least two directions (For example, in FIG. 21, a lower suspension movement means 13 may be provided further toward the front of the paper, so that the propulsion directions of the multiple suspension movement means 13 are arranged 90 degrees apart, etc.) so that the suspension movement means 13 can move freely in the XY direction.

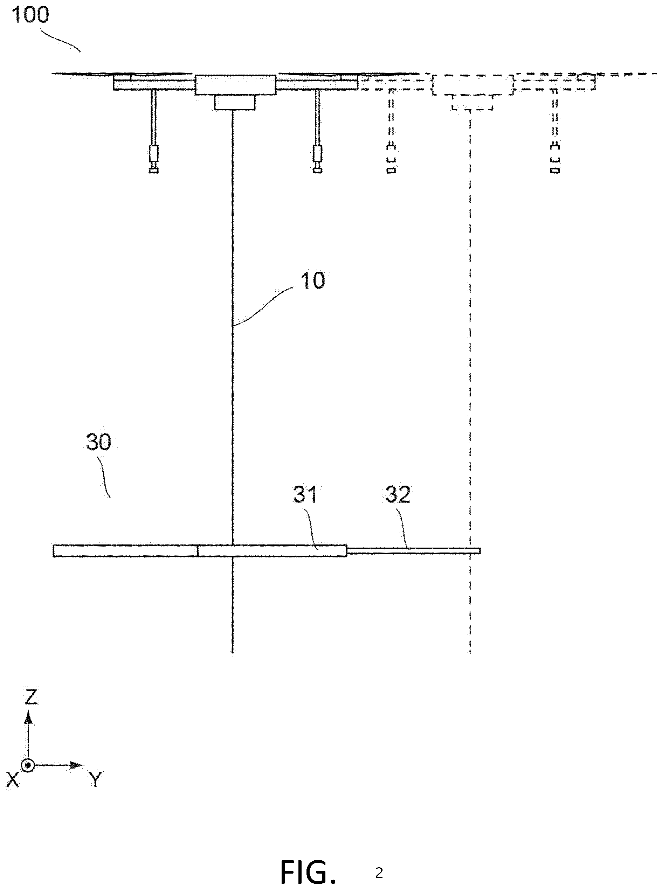

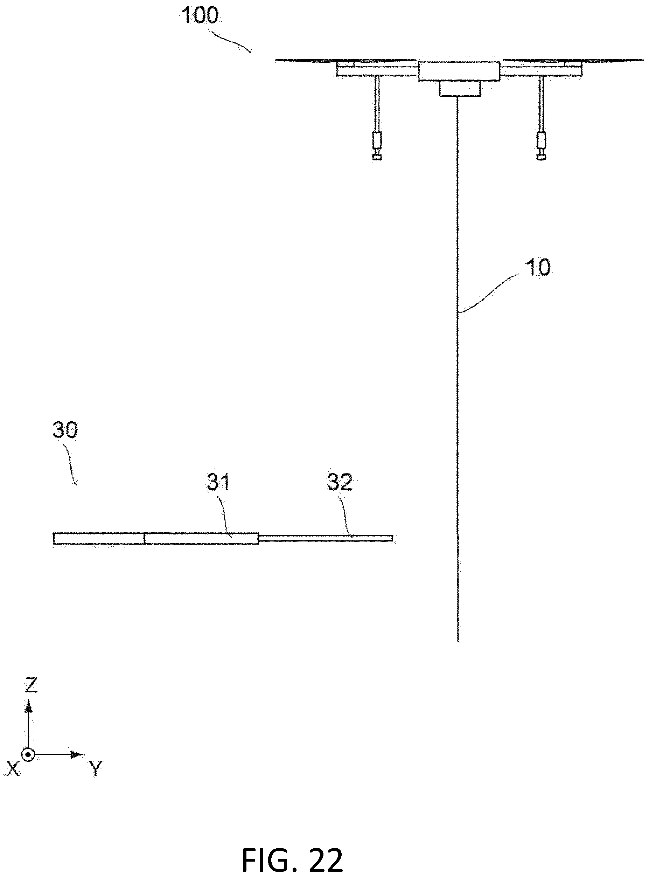

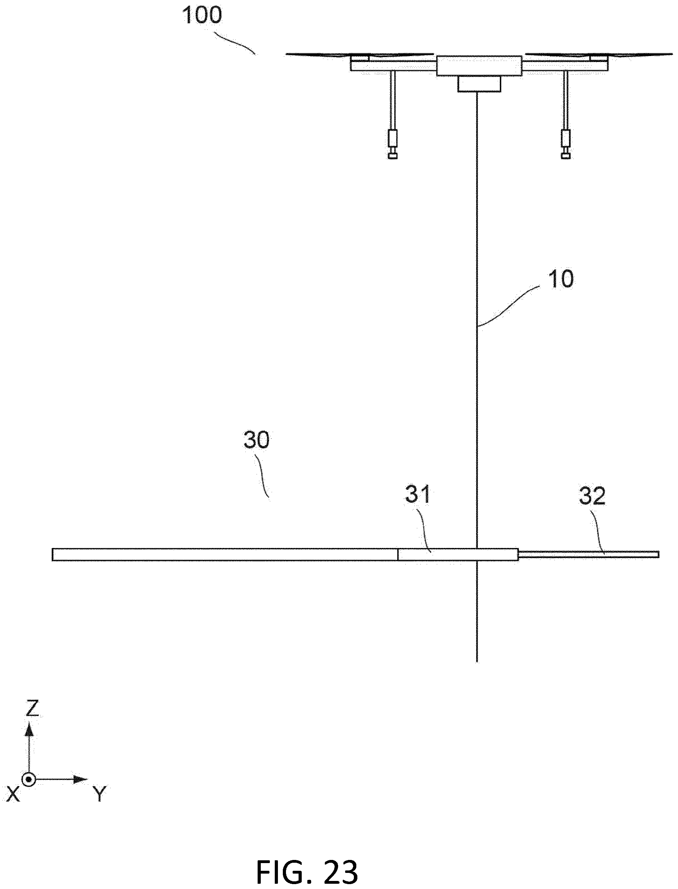

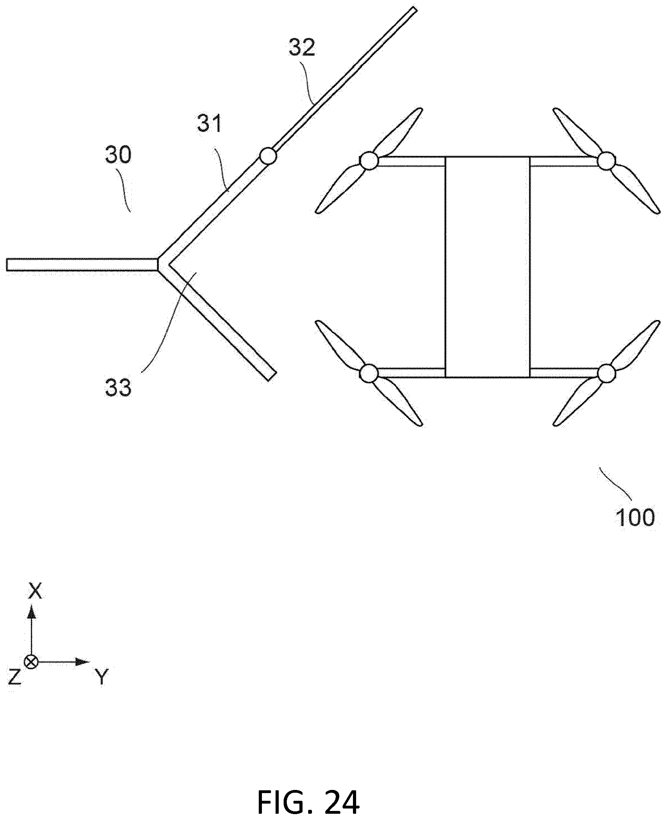

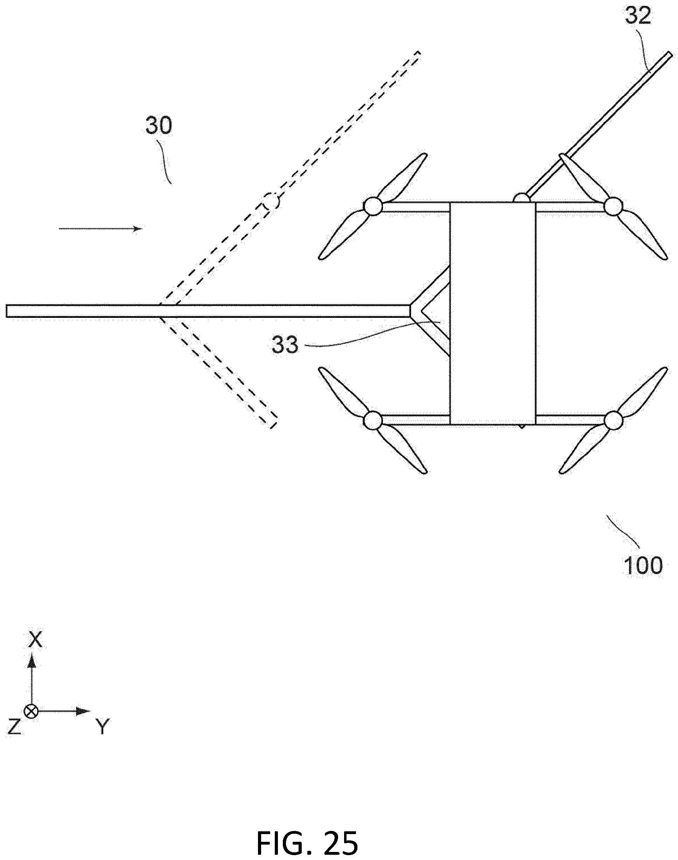

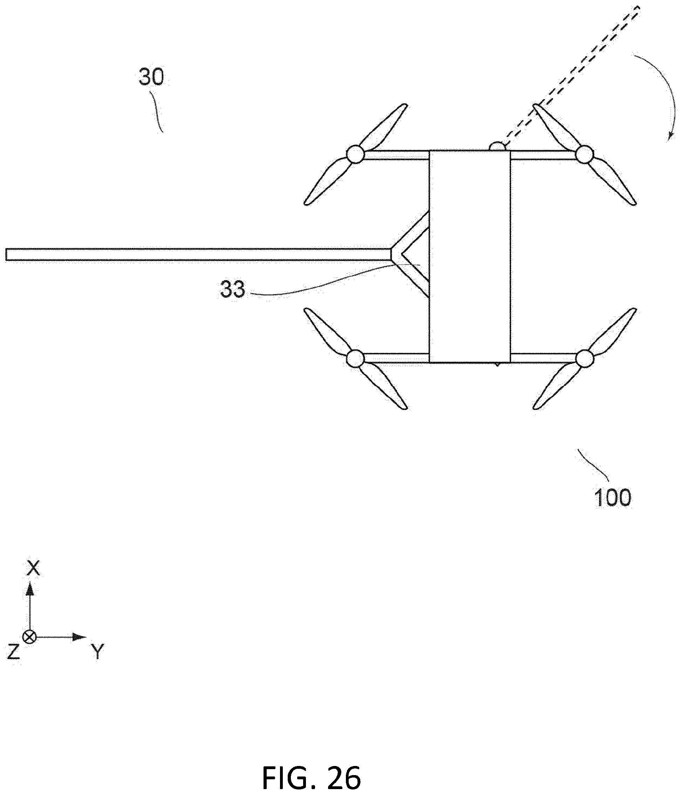

One method of accommodating the suspension member 10 in the enclosed space 33 is for the suspension member 10 to move and enter by the flight body 100 moving on a plane or the load 11 connected to the suspension member 10 moving on a plane, as illustrated in FIG. 1 and FIG. 2. Other methods include at least a portion of the position restriction device 30 approaching the suspension member 10 and accommodating it in the enclosed space 33, as illustrated in FIGs. 22 - 26.

When using the method where the position restriction device 30 approaches the suspension member 10, the position restriction device 30 is equipped with a structure, such as a robot arm or rail system, that can move the guide 31 or restricting member 32 in at least one of the X, Y, or Z directions. This allows the flight body 100 connecting the suspension member 10 to hover within a predetermined range to be position restricted.

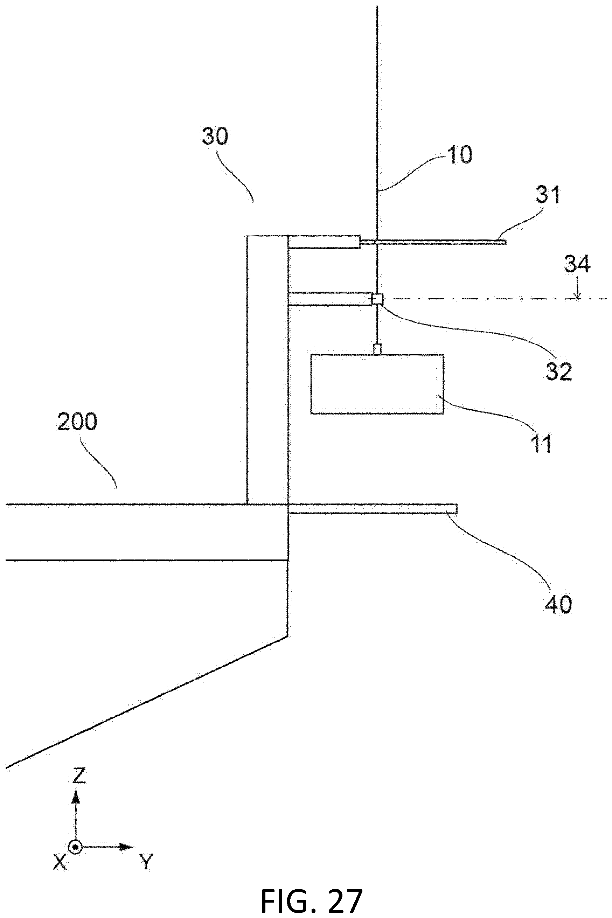

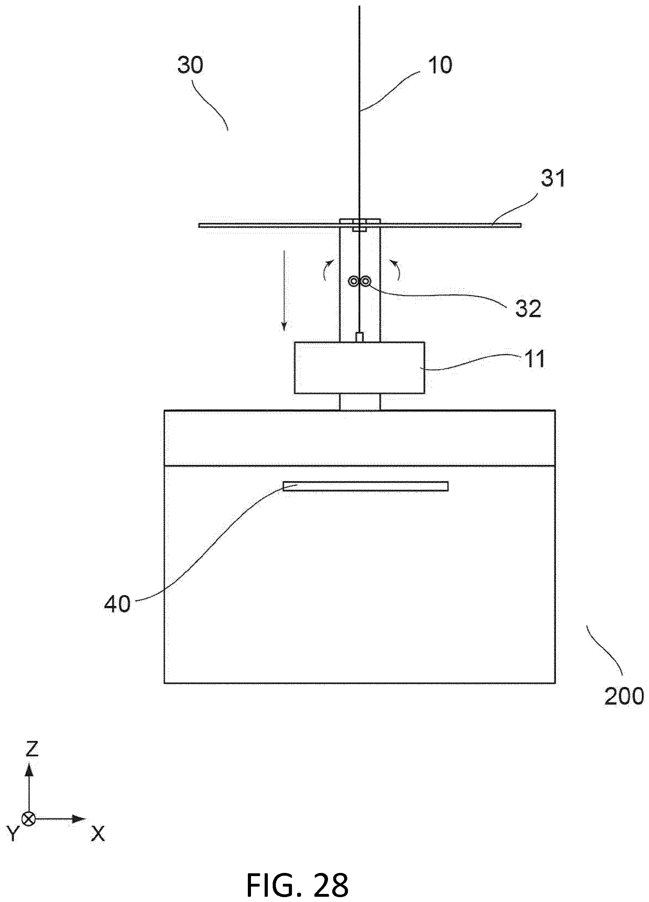

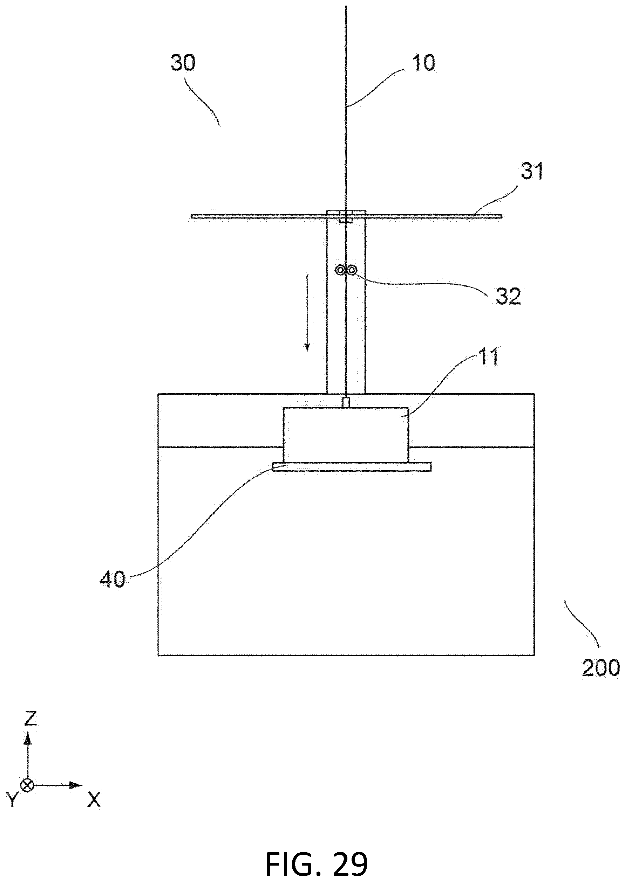

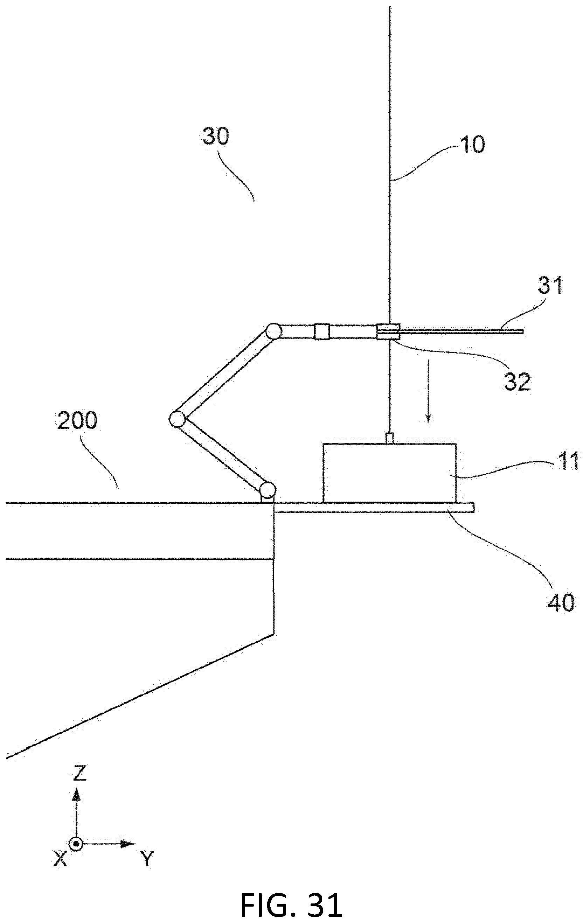

After the suspension member 10 enters the enclosed space 33, the suspension member 10 is restricted in movement by the restricting member 32. For example, there are methods of restricting movement, such as using the restricting member 32 as a movable member and closing the open part, as shown in FIG. 6 - FIG. 8 above, or using the restricting member 32 as a gripping device or winder and fixing the member, as shown in FIG. 9 - FIG. 11. FIG. 27 - FIG. 31 show specific examples of cases where the restricting member 32 is used as a winder or gripper to unload into the load receiving part 40.

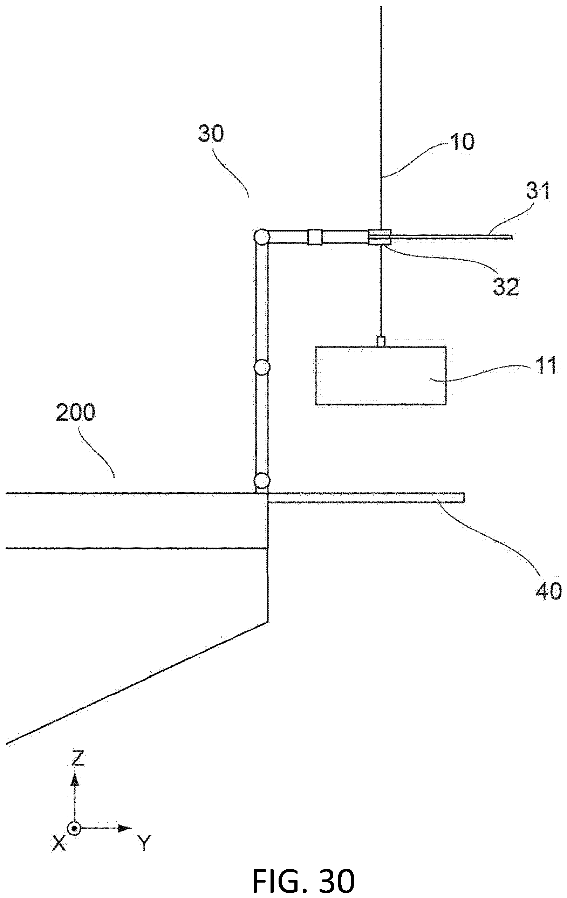

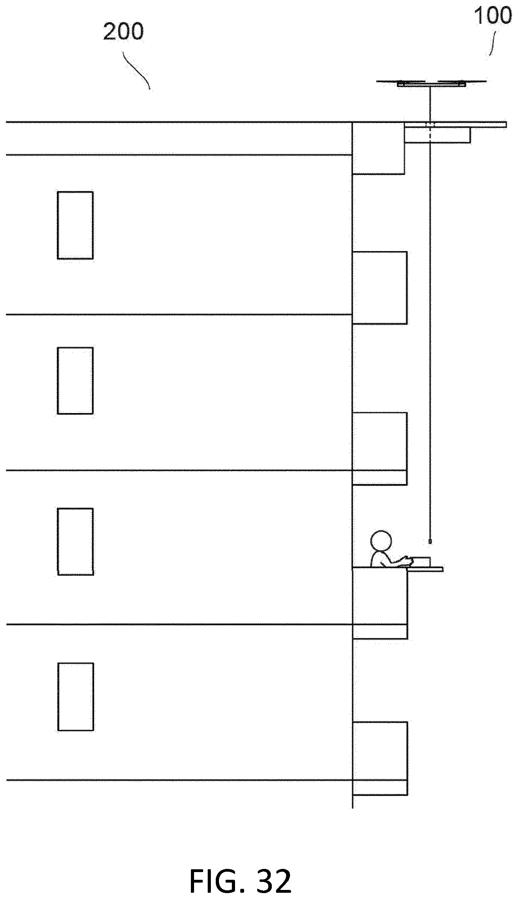

When the restricting member 32 has the function of gripping or fixing the suspension member 10 and moving it (when it is composed integrally as a hoisting and gripping part, as illustrated in FIG. 9 - FIG. 11, when separately contained and configured as a winder as illustrated in FIG. 27 - FIG. 29, and when configured as an arm having a gripping portion as illustrated in FIG. 30 and FIG. 32, etc.), it is possible to move the suspension member 10 to any position, regardless of the movement of the flight body 100 or the load 11. For example, when a delivery load is connected to the suspension member 10 and the position at which the suspension member is grasped is not suitable for unloading with respect to the load receiving part 40, the position restriction device 30 can change the height (Z-direction) or horizontal (XY-direction) position of the delivery load by winding it up with the hoisting section (winder) or by bending the arm or other deformation to make it suitable for detaching the delivery load. This eliminates the need for position adjustment by equipment connected to the flight body 100.

When the restriction member 32 is configured to grip the suspension member 10 (e.g., a winch, clamp, magnet, etc.), it is possible to use the position restriction device 30 to moor the flight body 100. Furthermore, it is possible to use the winding machine 14 to limit the amount of movement of the flight body 100 in the plane while allowing it to elevate and descend. This makes it possible to moor the flight body 100 at a higher than predetermined altitude and have it descend and land while preventing the flight body 100 from an unintended movement in the plane or running out of control. Conversely, the flight body 100 moored at a lower altitude can be released after ascending to a predetermined height, thereby preventing the flight body 100 from moving in planes or running out of control until it ascends to the predetermined height.

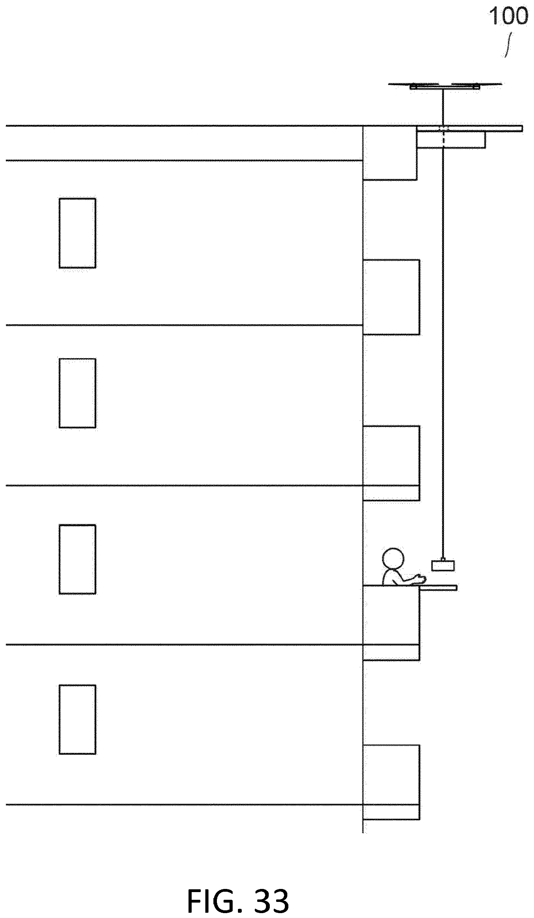

As illustrated in FIG. 32 and FIG. 33, a load or the like may be loaded onto the flight body 100 by connecting the load 11 to the suspension member 10 of the flight body 100 whose motion is restricted by the position restriction device 30. If the flight body does not approach the person making the connection or its vicinity (e.g., the flight body is located near the roof of a building, and the detachment of the load is performed downstairs), the possibility of contact, etc. between the flight body 100 and the person or structure 200 is reduced.

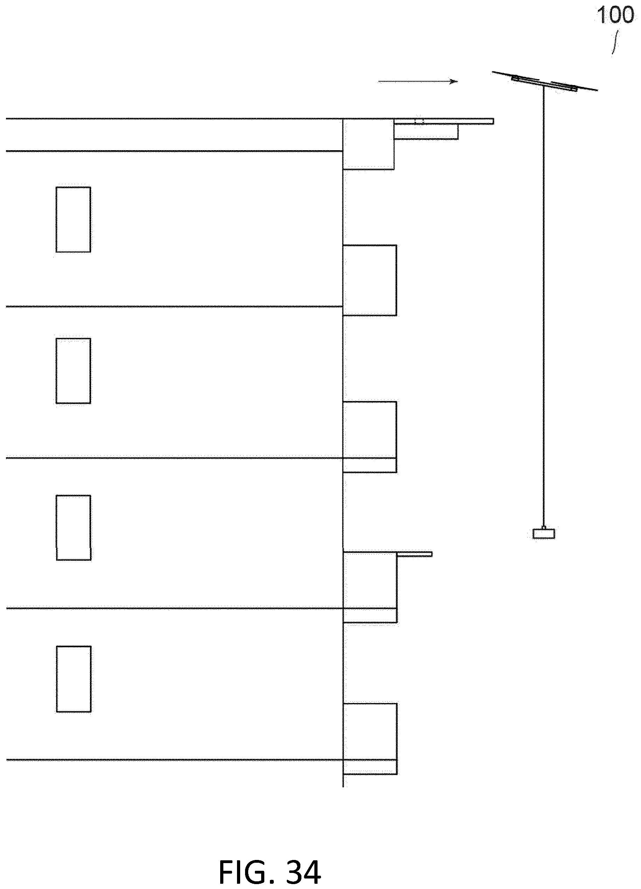

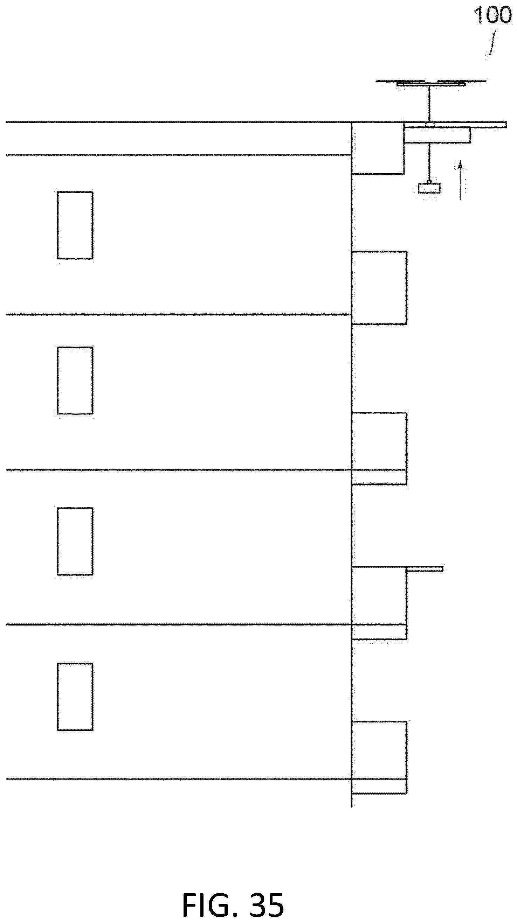

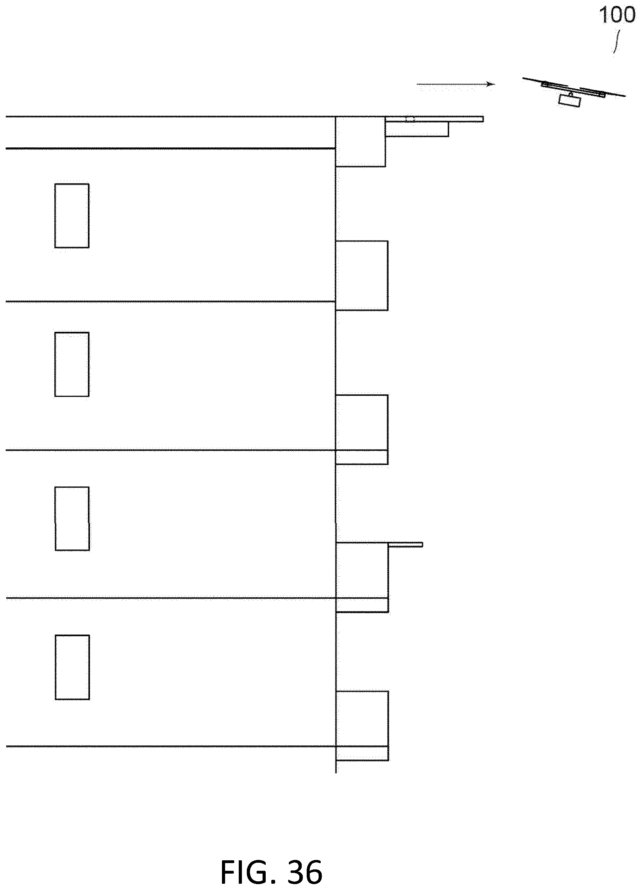

The flight body 100, whose movement is restricted by the position restriction device 30, may be released and begin moving with the suspension member 10 extended downward as shown in FIG. 34, or it may be released with the suspension member 10 shortened to a predetermined height as shown in FIG. 35 and FIG. 36.

For the movement of the suspension member 10 and the mount 11 connected to the suspension member 10 by the position restriction device 30, the position restriction device 30 may be equipped with a sensor for recognizing the position of the object, etc., and a processing unit for obtaining the amount of movement, etc., in addition to a winder, arm, etc. This improves the accuracy of position control when moving the load 11 or flight body 100 to a predetermined position.

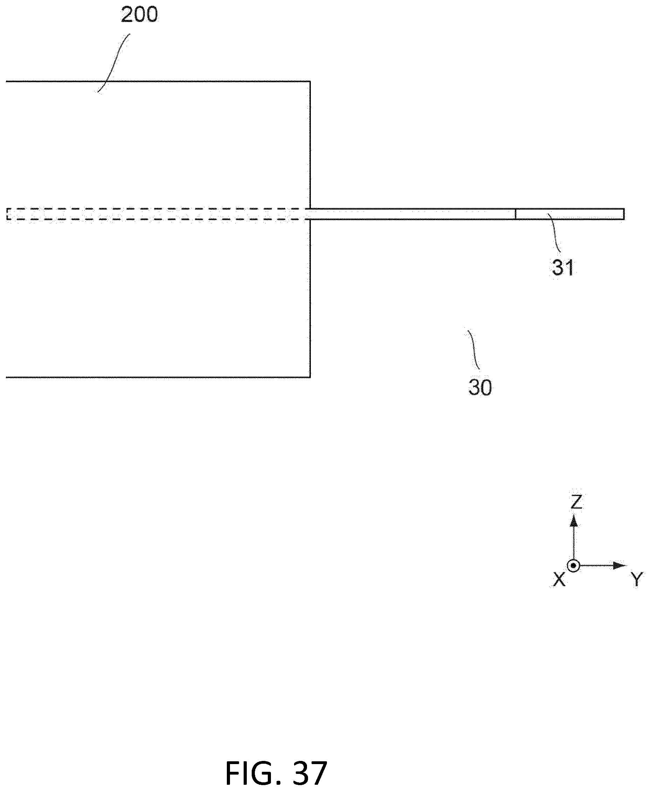

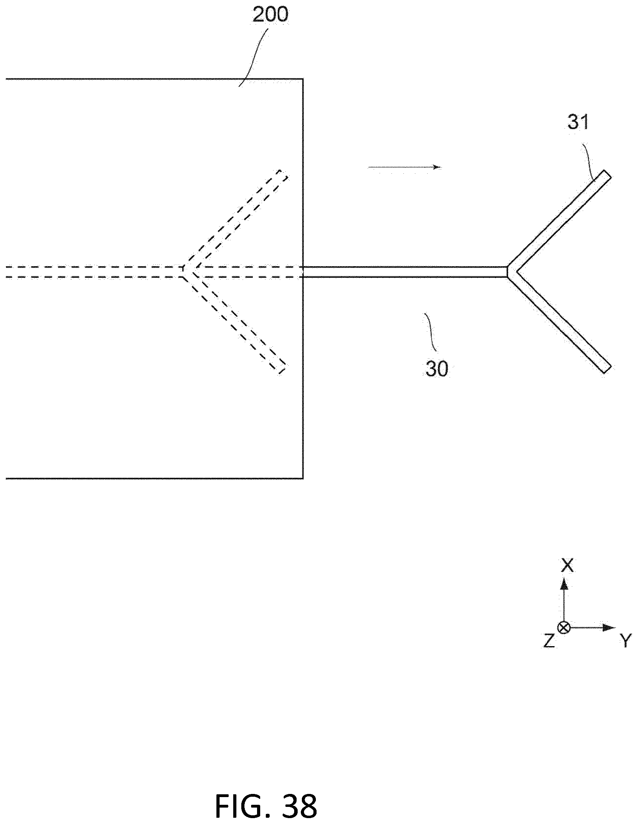

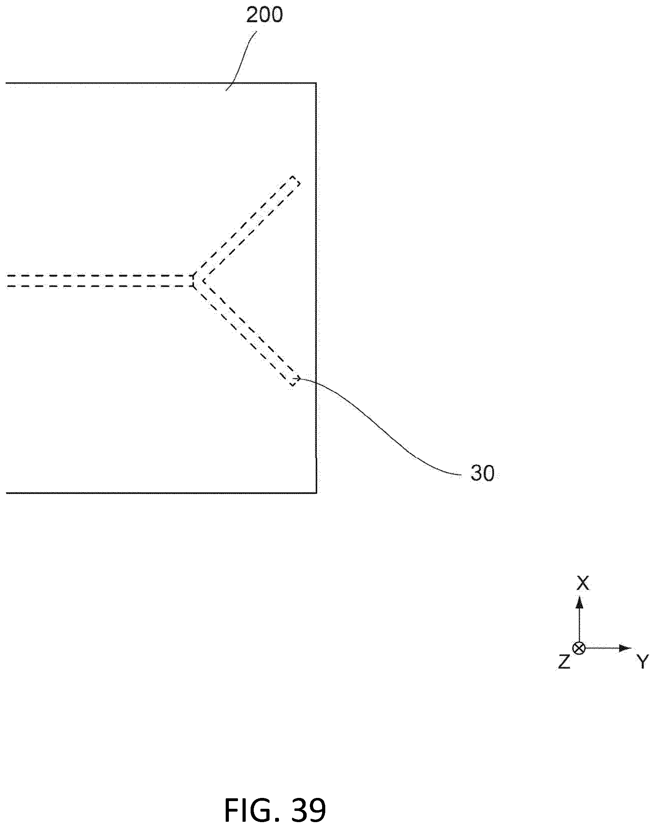

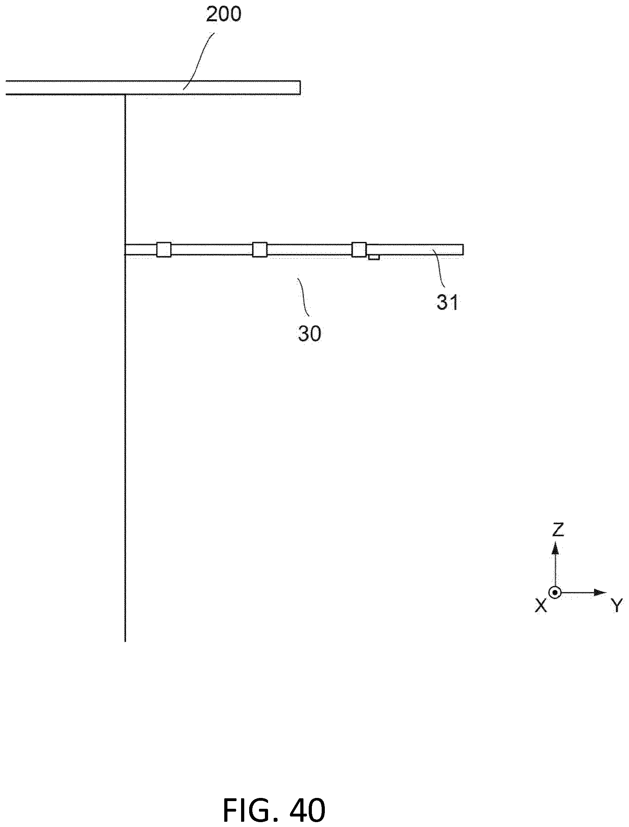

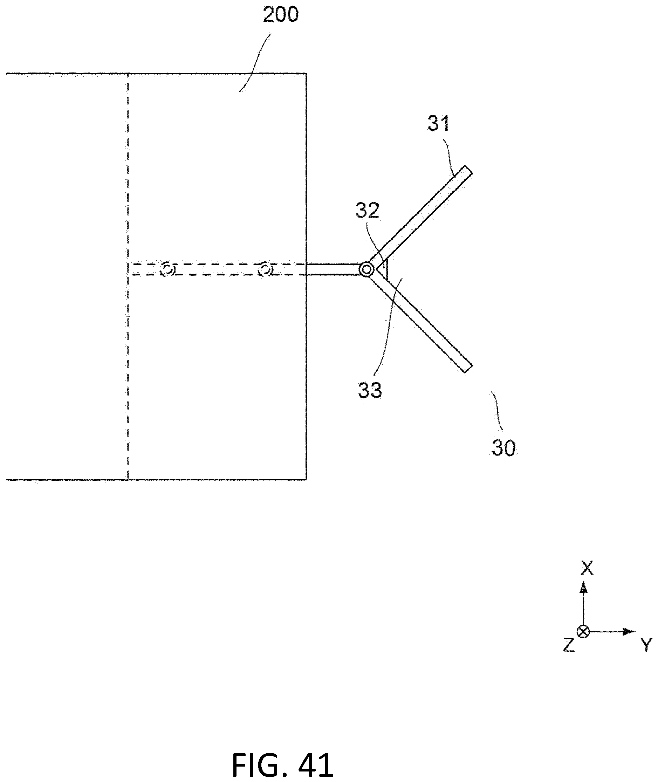

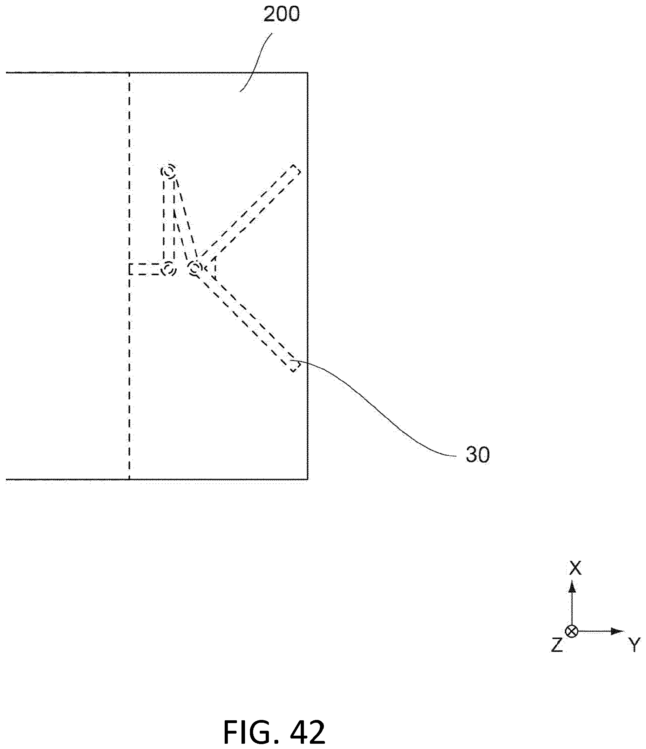

While the position restriction device 30 is not in use, the position restriction device, including the guide part, may be partially or completely folded up or stored in a building or other structure, as illustrated in FIG. 37 - FIG. 42. For example, if the device is stored under a roof or inside a structure that prevents exposure to wind and rain, it prevents the position restriction device's deterioration and damage.

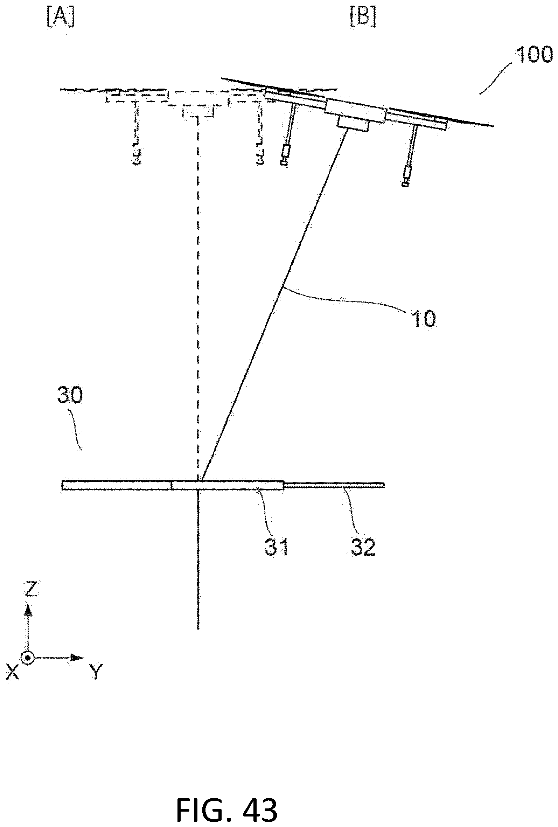

As illustrated in FIG. 43, when the position restriction device 30 releases the suspension member 10, the flight body 100 may be positioned substantially directly above the position restriction device 30 as in position [A], or the release may be performed with the flight body 100 moving horizontally as in position [B]. The method of release by the position restriction device 30 may be, besides releasing the gripping of the suspension member 10, to have a device that launches or pushes the suspension member 10 out of the position restriction device 30 at the same time as the release, to assist in moving the suspension member 10 away from the position restriction device 30.

In recent years, various forms of flight bodies have been considered and implemented for use in industries other than home delivery (e.g., inspection, survey, photography, surveillance, agriculture, disaster prevention, etc.). Depending on the operational environment, it may be difficult to provide a landing space for flight bodies. For example, when inspecting bridges at high elevations, there are cases where it is impossible to approach the bridges due to the distance from the ground, rivers, the sea, and other factors. In such cases, the flight body can be used as a temporary takeoff and landing facility, with the 30 position restriction devices connected to the bridge mooring or grasping the flight body.

The position restriction device 30 may be provided on a moving object (vehicle, ship, train, flight body, etc.). The moving object may be movable only within a predetermined range, or it may be unrestricted in its movement.

### <Details of the second embodiment>

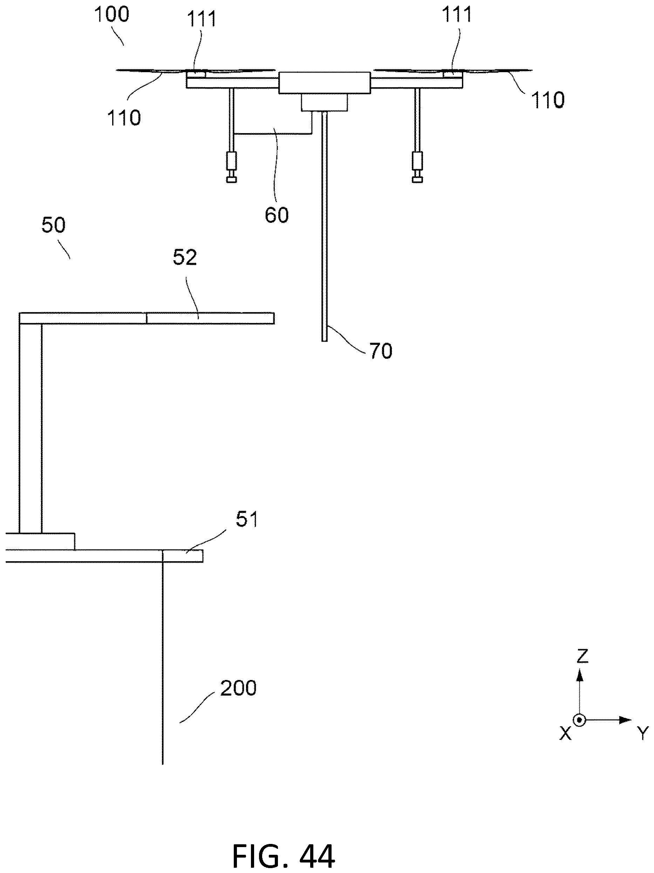

Next, a second embodiment of this disclosure will be described. As illustrated in FIG. 44 - FIG. 46, this embodiment of a method and system for receiving and delivering loads comprises one or more load receiving devices 50 and one or more flight bodies 100. For one load receiving device 50, multiple different flight bodies 100 may be capable of receiving and delivering loads 60, or the system may only allow delivery of loads 60 to and from a given flight body 100.

The load receiving device 50 has a restricting part 52 that can restrict the range of the movement of the flight body 100 or load 60, and a load receiving part 51 that receives loads that are detached from the flight body. The flight body 100 is a flight body that can take off, land, and fly with at least the load 60 connected to it, and has a restricted part 70 that can limit the movement range of the load by the load receiving part 50. The load 60 can be transported to the flight body 100 by being connected to the restricted part 70.

The flight body 100 connected to the 60 load performs takeoff from the takeoff point and delivers the 60 load to the destination. Upon reaching the destination, the flight body 100 disconnects the load 60 and delivers it to the load receiving device 50 to complete the delivery. Delivery of the load 60 by the flight body 100 may be performed, for example, by suspending the load 60 from the bottom of the flight body 100, as shown in the figure. For example, the load 60 is connected to the lower end of a restricted part 70 that is suspended from the flight body 100, and the restricted part 70 and the load 60 are detachable by known means. The detachment of the load 60 from the flight body 100 can be performed by such detachment means 61. After detaching the load 60, the flight body 100 is moving to other destinations (e.g., other load delivery destinations, distribution centers, warehouses, etc.). When delivering the load, the flight body 100 should not land and its flight altitude should be maintained at a distance where ground effects due to its position in relation to the ground and the load receiving device 50 do not occur (e.g., a distance where the distance between the load receiving device 50 and the flight body 100 is greater than or equal to the rotating diameter of the propeller 110).

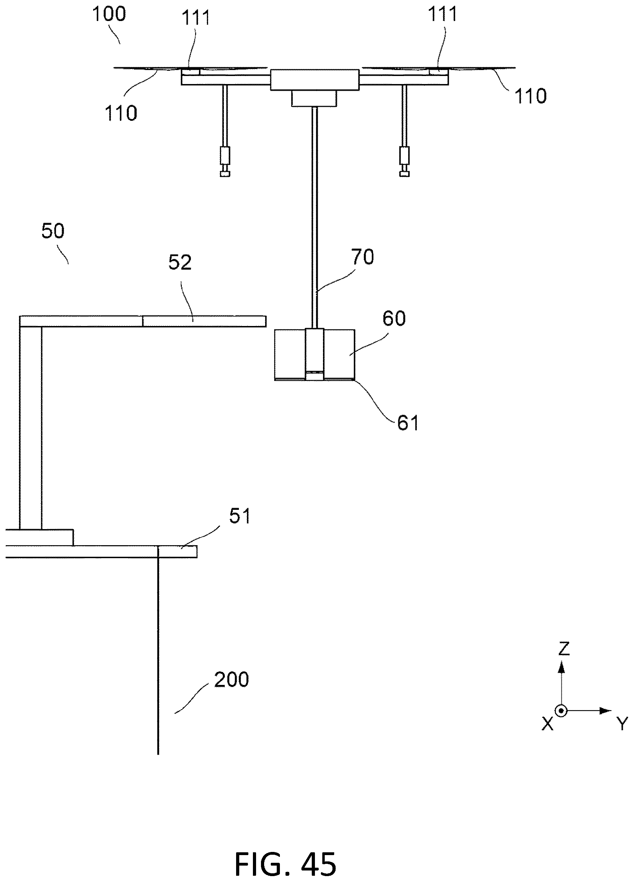

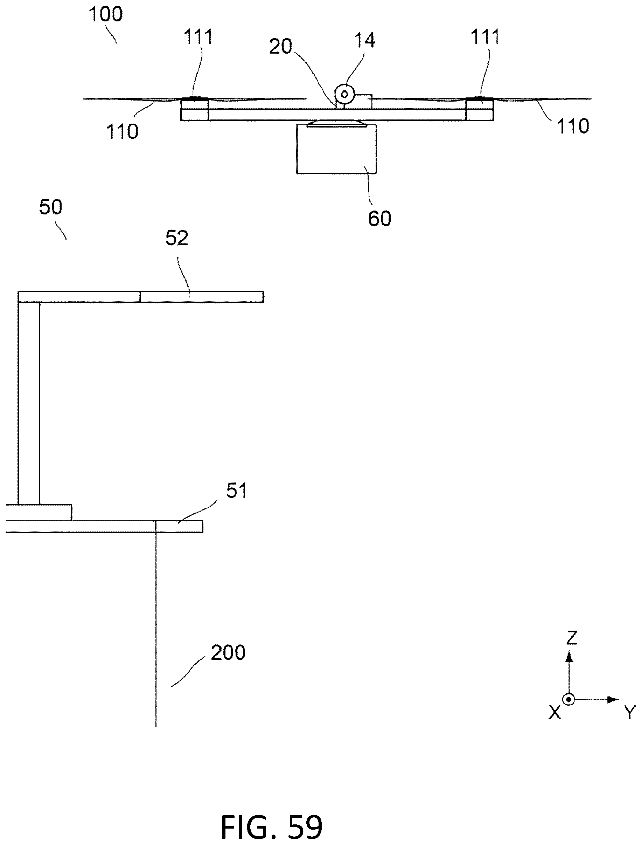

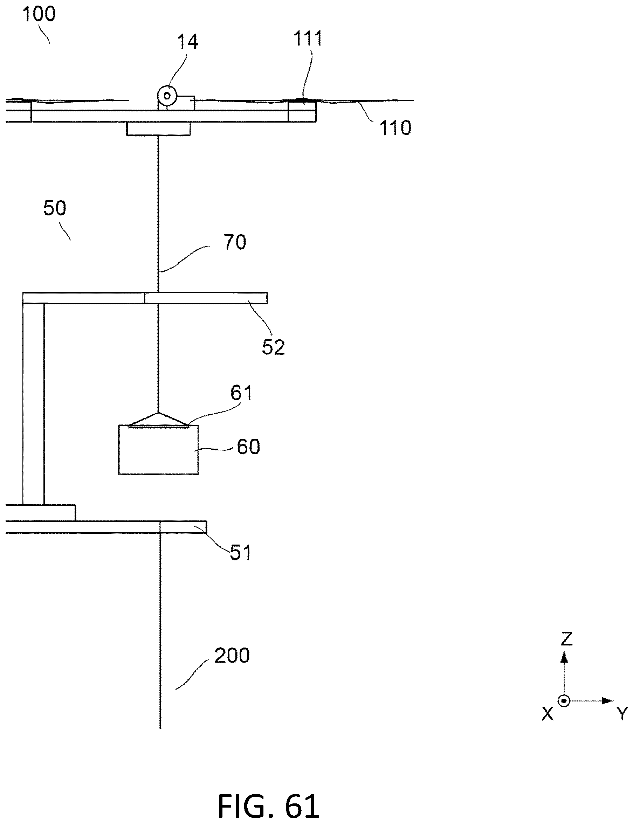

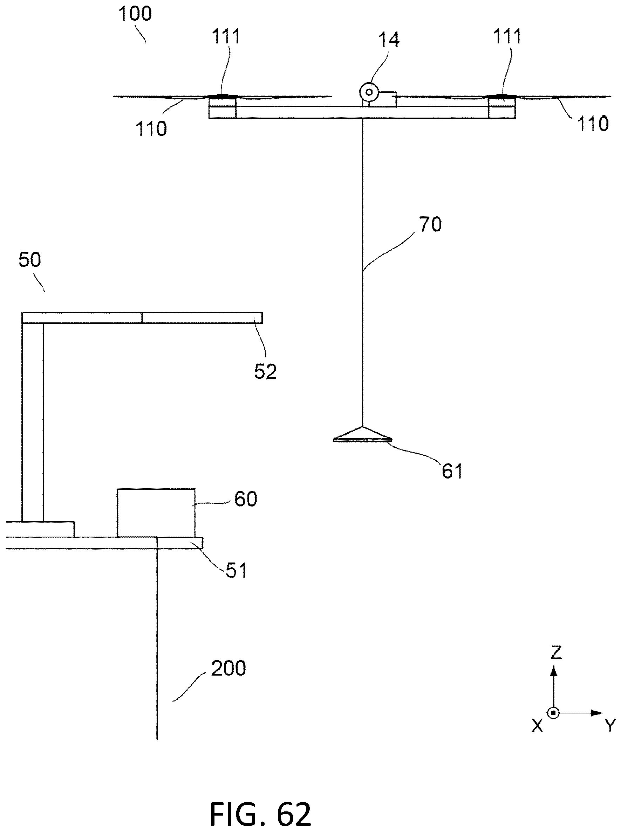

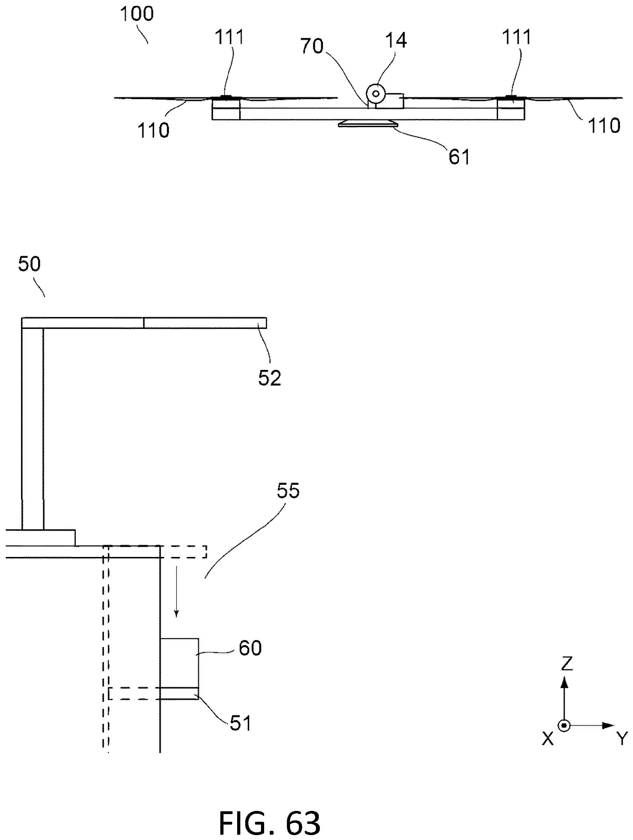

Detachable means 61 is a mechanism having a configuration that can detach the restricted portion 70 and the load 60. Specific examples of the mechanism that detachable means 61 can have are described with reference to the drawings. The detachable means 61 shown in FIG. 21 is a coupling mechanism in the form of a cylinder. A pair of coupling mechanisms connected to the restricted part 70 and the load 60 are connected or disconnected by rotation by a motor or the like, by operation by a person, or by a change in gravity applied to the coupling mechanism. The detachable means 61 shown in FIG. 45 comprises a plate-like member, a rod-like member, or the like, on which the load 60 is placed and which supports the bottom side of the load 60. When detaching the load 60, the plate or bar member can be rotated or slid so that the part supporting the load 60 is reduced, allowing the load 60 to fall downward. The detachable means 61 shown in FIG. 59 - FIG. 63 can be connected by pinching the load 60 from two directions and can be detached by weakening the pinching of the load 60.

Since the flight body 100 does not land on the load receiving device 50, etc., it is possible to receive and deliver loads without temporarily stopping the rotation of the motor 111 and propeller 110. This reduces the energy used to start the motor for takeoff and the probability of failure. In addition, by restricting the movement of the flight body 100 at a position where the ground effect does not occur, the distance over which the load is suspended can be reduced while keeping the flight body 100 stable. This is expected to prevent the 60 loads from swaying and to improve the accuracy of the position of the 60 loads in the delivery of the 60 loads.

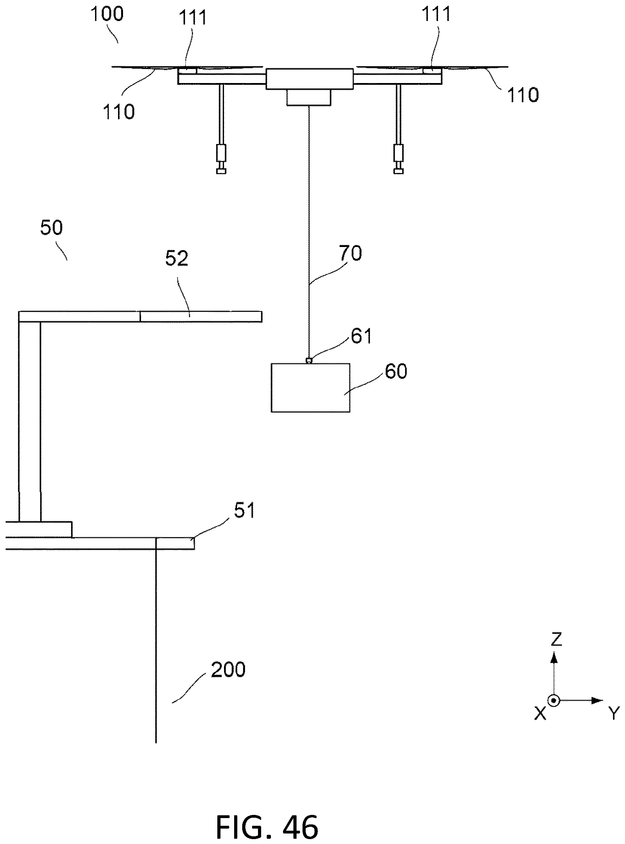

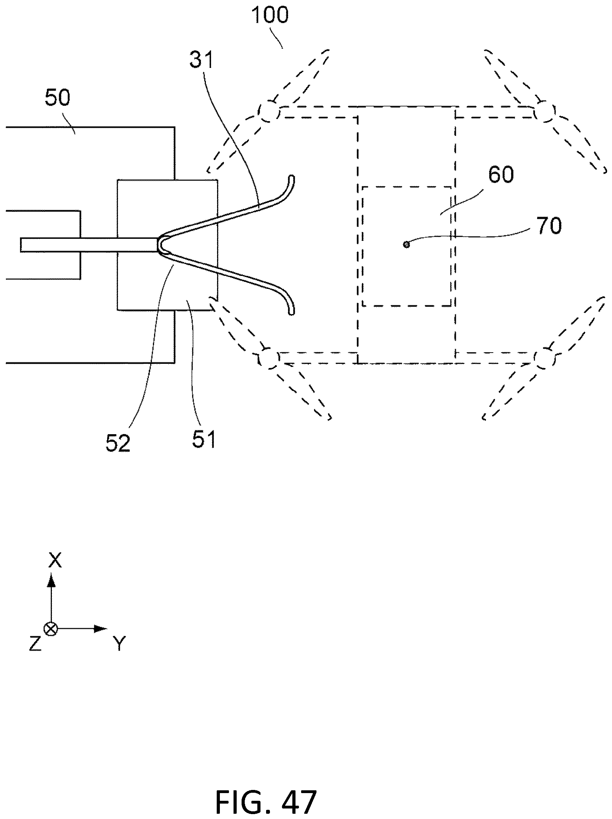

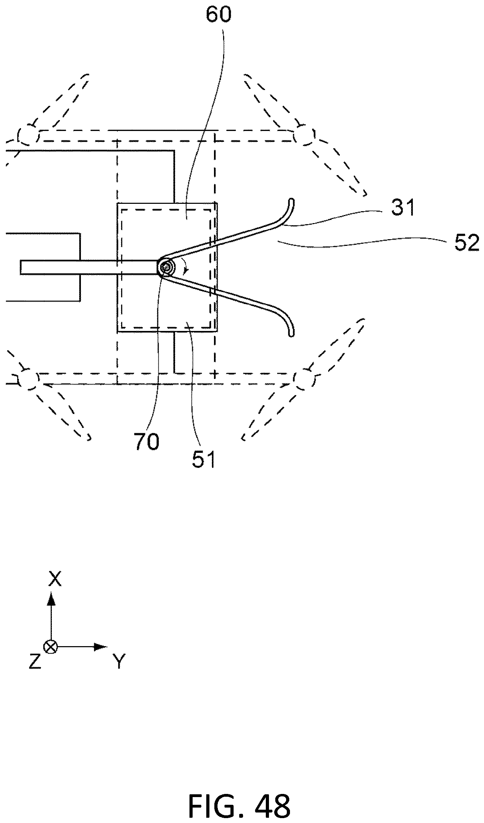

Referring to FIG. 46 - FIG. 48, an example of the operation of delivering loads to the load receiving device 50 is described. First, a flight body 100 carrying a load 60 flies to a predetermined position near the load receiving device 50. Next, the restricting part 52 restricts the range of movement of the restricted part 70 equipped with the flight body 100. The restricting part 52 may be provided with a guide part 31 that assists the entry of the restricted part 70, as illustrated in FIG. 47. For example, as shown in FIGs. 47 and 48, the restricting part 52 may be provided with a ring lock shaped bridle. As illustrated in FIGs. 47 and 48, the restricted part 70 may be a string or rod-shaped member. The restricting part 52 may operate the restricting part 52 to enclose a portion of the restricted part 70. When the restricted part 70 approaches a predetermined position of the restricting part 52, the ring lock-shaped bridle rotates to secure the restricting part 70 and restrict the position of the flight body 100.

The flight body 100 is detached from the cargo under the restriction of movement by the load receiving device 50. After the load 60 is received from the flight body 100 to the load receiving part 51, the restricting part 52 lifts the restriction of the restricted part 70, thereby releasing the flight body 100 and allowing free movement.

The flight body 100 used in this embodiment is any flight body (e.g., a multicopter, helicopter, fixed-wing aircraft, etc.). In the description of this embodiment, the case in which a multicopter equipped with multiple rotary wing parts is used will be described.

As shown in FIG. 44, the flight body 100 has a flight part that includes at least a plurality of rotary wing parts consisting of a propeller 110 and a motor 111 and elements such as motor mounts and frame 120 that support said rotary wing parts in order to perform flight. It should also be equipped with energy (e.g., secondary batteries, fuel cells, fossil fuels, etc.) to operate them.

The flight body 100 shown in the figures is depicted in simplified form to facilitate the description of the structure of the present disclosure, and detailed components such as the control part, for example, are not shown in the figures.

The flight body 100 is moving forward in the direction of arrow D (-Y direction) in FIG. (see below for details).

In the following explanation, the terms may be used differently according to the following definitions. Forward/backward: +Y and -Y, up/down (or vertical): +Z and -Z, left/right (or horizontal): +X and -X, forward direction (forward): -Y, rearward direction (backward): +Y direction, ascending direction (upward): +Z direction, descending direction (downward): -Z direction.

The propeller 110 rotates upon receiving output from the motor 111. The rotation of the propeller 110 generates propulsive force to take the flight body 100 off from the starting point, moving, and landing at the destination. The propeller 110 can rotate to the right, stop, and rotate to the left.

The propeller 110 provided by the flight body of the present disclosure has one or more blades. The number of blades (rotors) can be any (e.g., one, two, three, four, or more blades). The shape of the blades can be any shape, such as flat, curved, kinked, tapered, or a combination thereof. The shape of the blades can be changeable (e.g., stretched, folded, bent, etc.). The blades can be symmetrical (having identical upper and lower surfaces) or asymmetrical (having differently shaped upper and lower surfaces). The blades can be formed into airfoils, wings, or any geometry suitable for generating dynamic aerodynamic forces (e.g., lift, thrust) as the blades are moved through the air. The geometry of the vane can be selected as appropriate to optimize the dynamic aerodynamic characteristics of the vane, such as increasing lift and thrust and reducing drag.

The propeller provided by the flight body 100 of the present disclosure may be, but is not limited to, fixed pitch, variable pitch, or a mixture of fixed and variable pitch.

The motor 111 produces rotation of the propeller 110; for example, the drive unit can include an electric motor or engine. The blades can be driven by the motor and rotate around the axis of rotation of the motor (e.g., the long axis of the motor).

The blades can all rotate in the same direction or can rotate independently. Some of the blades rotate in one direction while others rotate in the other direction. The blades can all rotate at the same RPM, or they can each rotate at a different RPM. The number of rotations can be determined automatically or manually based on the dimensions of the moving object (e.g., size, weight) and the control conditions (speed, direction of movement, etc.).

The flight body 100 determines the number of revolutions of each motor and the angle of flight according to the wind speed and direction by means of the flight controller 1001, ESC 112, and transceiver/transreceiver (radio/propo) 1006. This allows the flight body to perform movements such as ascending and descending, accelerating and decelerating, and changing direction.

The flight body 100 can fly autonomously according to routes and rules set in advance or during the flight, or by using the transceiver (radio/propo) 1006 to control the flight body.

The flight body 100 described above has the functional blocks shown in FIG. 14. The functional block in FIG. 14 is an example of a minimum reference configuration. The flight controller 1001 is a so-called processing unit. The processing unit can have one or more processors, such as a programmable processor (e.g., a central processing unit (CPU)). The processing unit has a memory, not shown, which is accessible. The memory stores logic, code, and/or program instructions that can be executed by the processing unit to perform one or more steps. The memory may include, for example, a separable medium such as an SD card or random access memory (RAM) or an external storage device. Data acquired from sensors 1002 may be directly transmitted to and stored in the memory. For example, still and video data captured by a camera or other device is recorded in the internal or external memory.

The processing unit includes a control module comprising to control the state of the rotorcraft. For example, the control module controls the propulsion mechanism (e.g., motor) of the rotorcraft to adjust the spatial arrangement, speed, and/or acceleration of the rotorcraft having six degrees of freedom (translational motion x, y and z, and rotational motion θx, θy and θz). The control module can control one or more of the states of the loading part, sensors, etc.

The processing unit is in communication with a transmission/reception unit 1005 configured to transmit and/or receive data from one or more external devices (e.g., terminals, display units, or other remote controllers). The transceiver/transreceiver 1006 can use any suitable means of communication, such as wired or wireless communication. For example, the transmission/reception unit 1005 can use one or more of local area network (LAN), wide area network (WAN), infrared, wireless, WiFi, point-to-point (P2P) network, telecommunication network, cloud communication, etc. The transmission/reception unit 1005 can transmit and/or receive one or more of the following: data acquired by the sensors 1002, processed results generated by the processing unit, predetermined control data, and user commands from a terminal or remote controller.

Sensors or the like 1002 in this embodiment can include inertial sensors (accelerometers, gyroscopes), GPS sensors, proximity sensors (e.g., lidar), or vision/image sensors (e.g., cameras).

The plane of rotation of the propeller 110 equipped with the flight body 100 in this embodiment tilts forward at an angle toward the direction of travel when the flight body 100 is advancing. The forward inclined rotating surface of the propeller 110 generates upward lift and thrust in the direction of travel, which propels the flight body 100.

The flight body 100 may be equipped with a main body part that can contain a processing unit, battery, and other components to be mounted on the flight body 100 in the flight part, which is equipped with a motor, propeller, frame, and other components to generate lift and thrust. The main body part can optimize the shape of the flight body 100 in its attitude during cruising, which is expected to be maintained for a long time during the movement of the flight object 100, and increase the flight speed, thereby efficiently reducing the flight time.

The main body part should have an outer skin that is strong enough to withstand flight, takeoff and landing. For example, plastic and FRP are suitable materials for the outer skin because of their rigidity and water resistance. These materials may be the same material as the frame 120 (including arms) included in the flight part, or they may be different materials.

The motor mount, frame 120, and main body part provided by the flight part may be comprised by connecting their respective parts, or they may be molded as a single unit using a monocoque structure or integral molding (for example, the motor mount and frame 120 can be molded as one piece, or the motor mount, frame 120, and main body part can all be molded as one piece, etc.). By integrating the parts as one piece, the joints between each part can be made smooth, which is expected to reduce drag and improve fuel efficiency of flight bodies such as blended wing bodies and lifting bodies.

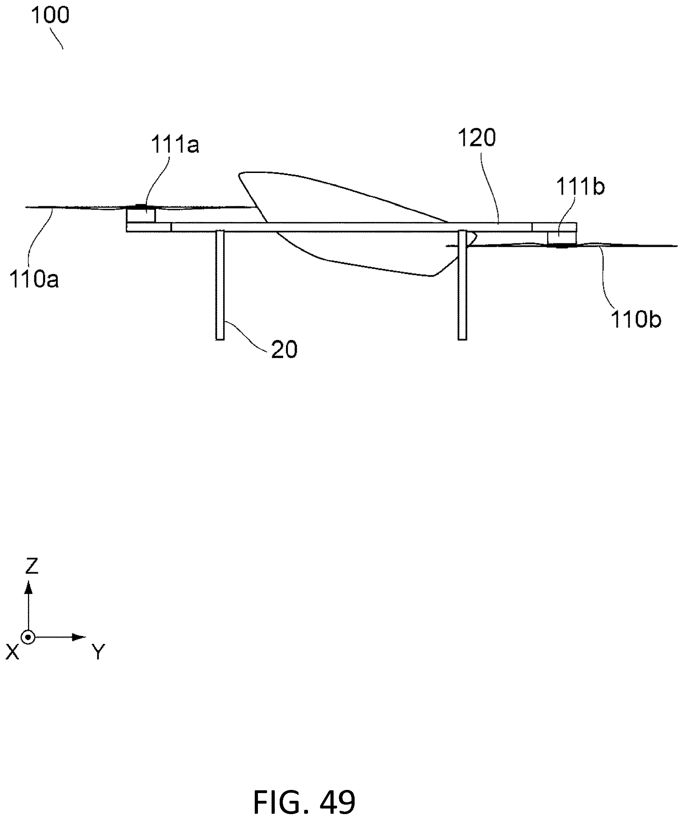

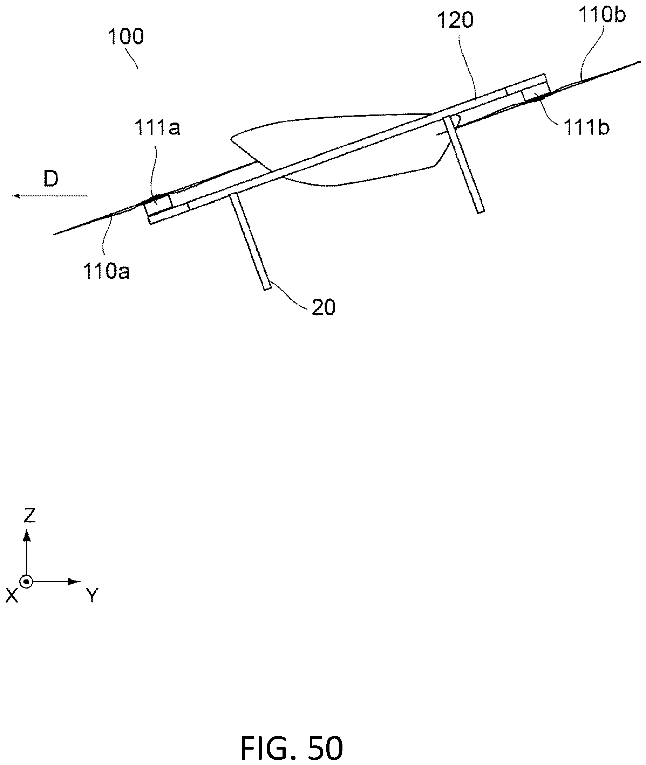

The shape of the flight body 100 may be directional, as illustrated in FIG. 49 - FIG. 50. For example, the flight body 100 may have a streamlined main body part with low drag in cruising attitude in no wind, or other shapes that improve flight efficiency when the nose of the flight body is facing directly into the wind.

The flight body 100 has a restricted part 70 whose movement range can be restricted by the restricting part provided by the load receiving device 50. The restricted part 70 may be a dedicated component for the purpose of restricting the range of movement, or it may be a landing leg of the flight body 100. The restricting part 70 may also serve other functions, such as holding a load during flight of the flight body 100.

The member used for the restricting part 70 can be a long member, such as a rod-shaped member or a string-shaped member, as shown in FIGs. 45 and 46, as an example. When the member is long, the range of the restricted part 70 that the restricting part 52 can restrict is wider in the vertical direction, making it easier to restrict the movement of the flight body 100 by the restricted part 70. If the restricted part 70 is large, restricting movement becomes easier, but may lead to increased drag during flight. Therefore, it is preferable that the restricted part 70 comprise, for example, an extendable or collapsible part.

If the restricting part 52 and the restricted part 70 have sufficient strength and rigidity to support the flight body 100, for example, the flight body 100 will be able to hold its attitude even when the rotation of the propeller 110 is reduced or stopped.

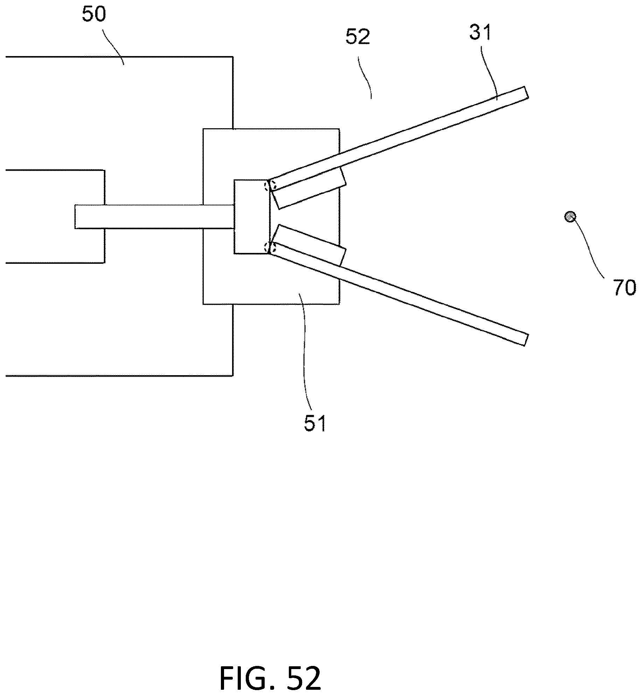

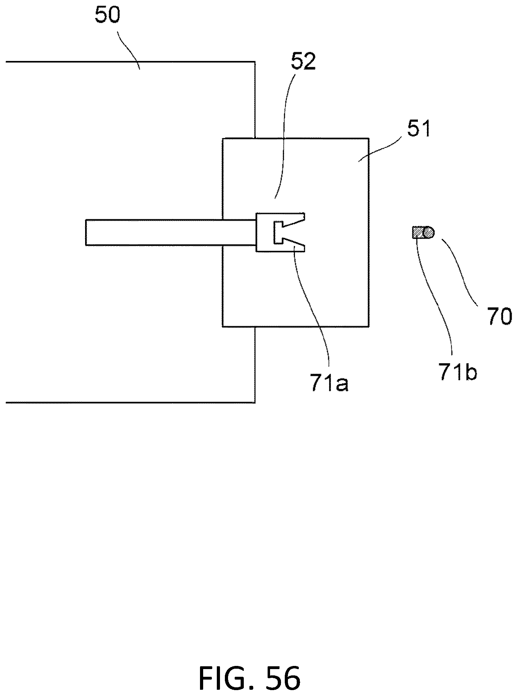

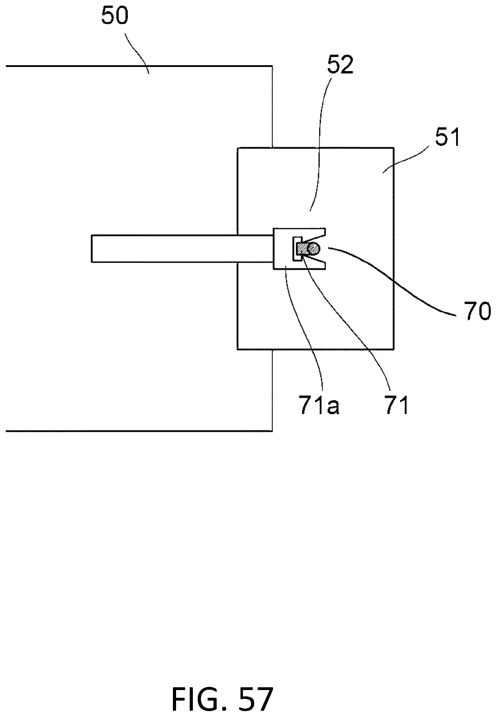

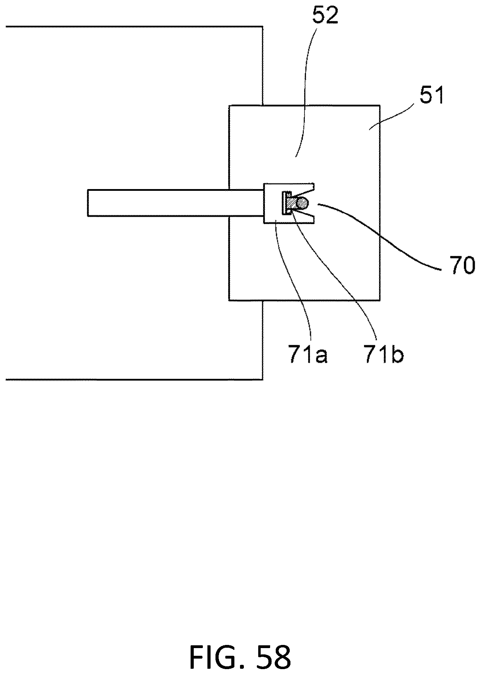

One method of restricting the range of movement of the flight body 100 is for the restricting part 52 to grasp or hold the restricted part 70. Since the restricting part 52 and the restricted part 70 are temporarily fixed to each other, movement restriction can be performed more securely. For example, as shown in FIG. 52 - FIG. 55, the restricting part 52 can be moved to pinch and secure the restricted part 70, as in a holding tool. Another method is to secure the restricted part 70 by the restricting part 52 using joint parts 71a provided in the paired restricting part 52 and joint parts 71b provided in the restricted part 70, as shown in FIG. 56-Fig. 58.

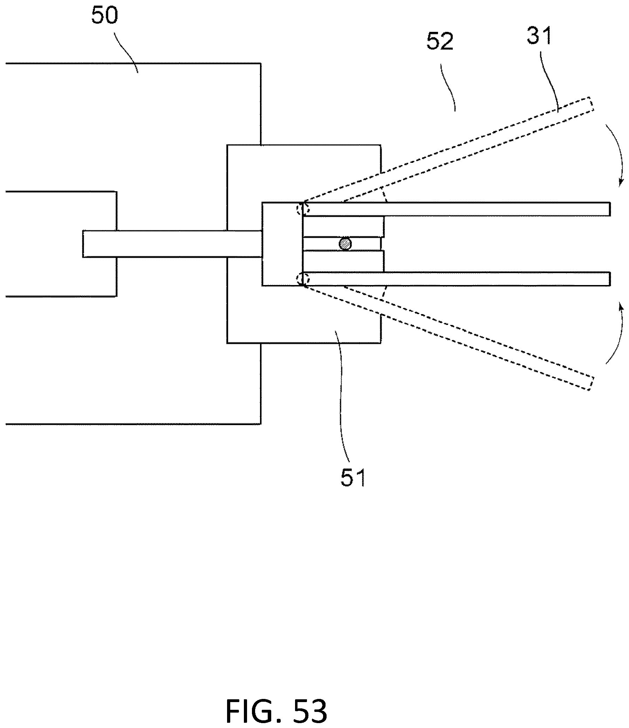

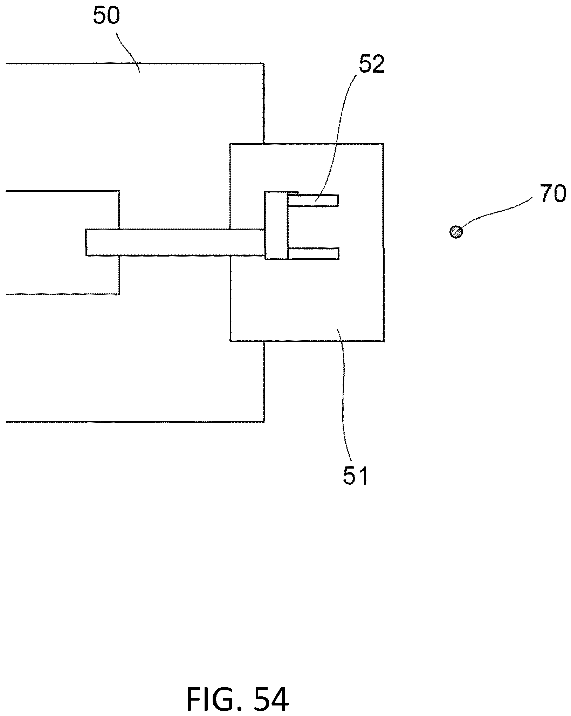

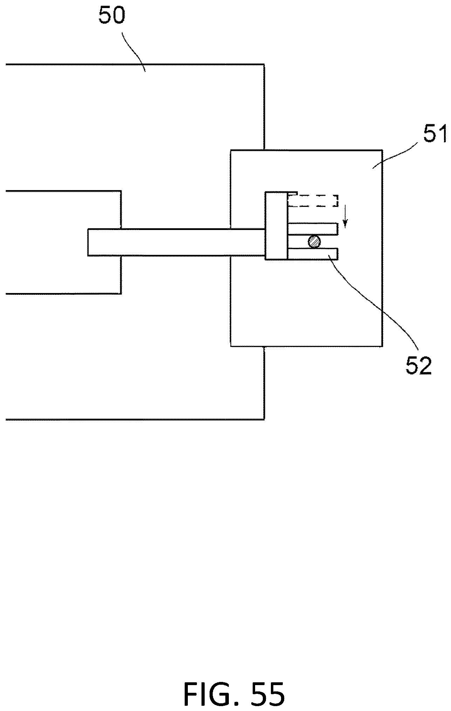

When using the form of a restricting tool, with the restricted part 70 positioned in a predetermined space, the restricting part 52 performs an action to narrow the space and holds the restricted part 70 down and secures it. Then, the restricting part 52 opens and performs a movement to widen the space again, thereby releasing the restricted part 70. The restricting part 52 shown in FIG. 52 and FIG. 53 has two parts that each rotate, pinching the restricted part 70 and restricting its position. The restricting part 52 shown in FIG. 54 and FIG. 55 has one of the parts slide, pushing the restricted part 70 toward the other part. This provides positional restriction.

When joint parts 71 are used, there are joint parts 71a and 71b corresponding to the restricting part 52 and the restricted part 70, respectively. By engaging and opening the joint parts 71 each other, it is possible to restrict the movement of the flight body 100 or release the fixation of the flight body 100.

In this case, the restricted part 70 should have a part of a size that the restricting part 52 cannot pass through connected to the side opposite the side connected to the flight body 100. For example, if the restricted part 70, which is a string-like member, is connected to the load 60, it is expected to prevent the restricted part 70 from slipping out of the restricting part 52 when the restricting part 52 is fixed between the flight body 100 and the load 60.

The restricting part 52 may be provided with a guide part 31 that assists in the entry of the restricted part 70, as illustrated in FIG. 47 and FIG. 52. By using the guide part 31, the position of the flight body 100 can be more easily controlled.

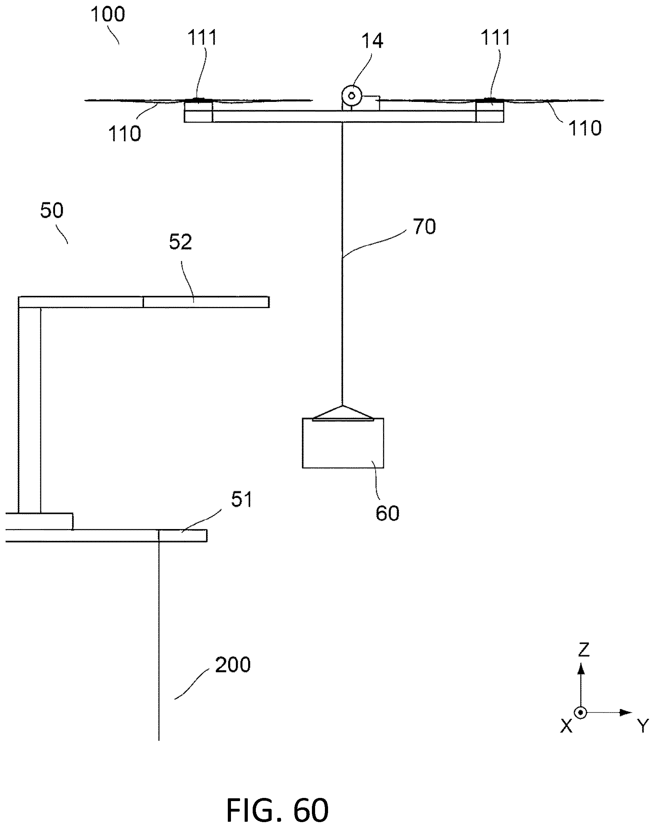

When the restricted part 70 is a string-like member, it may be connected at one end to the winder 14 provided by the flight body 100, as illustrated in FIG. 59 and FIG. 60, and comprise a restricted part that can be unrolled and wound up. By making the unrolling length of the restricted part 70 adjustable, it is possible to restrict the movement of the flight body 100 while keeping the hovering position of the flight body 100 high, or to raise or lower the load when the 60 load is connected to the restricted part 70.

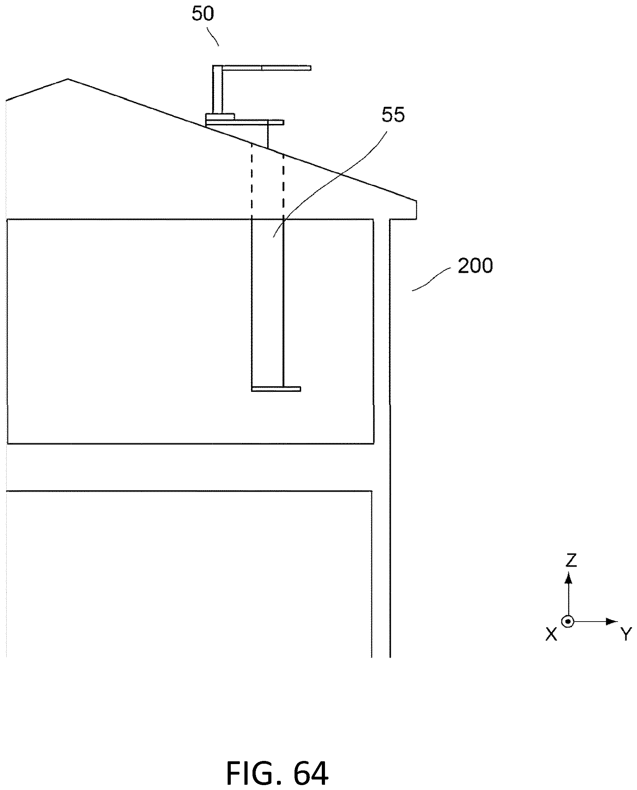

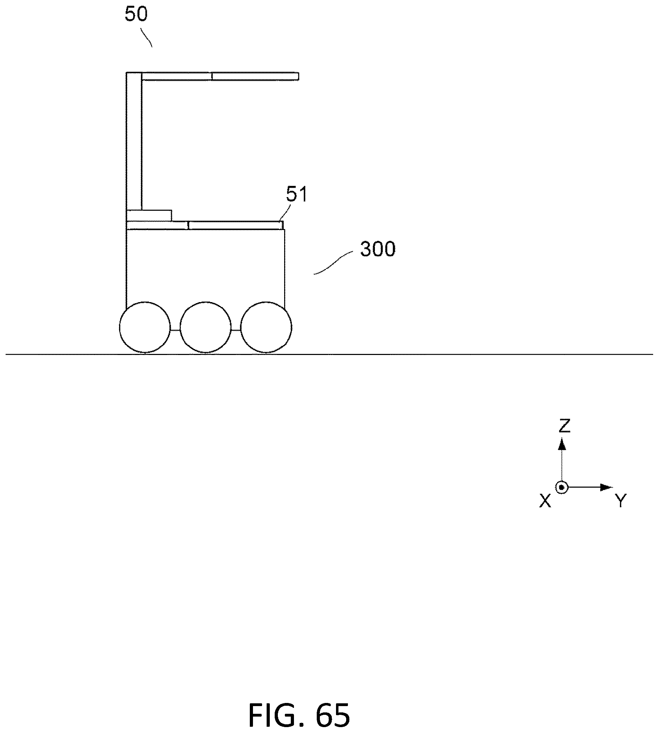

The load receiving device 50 may be installed in connection with a structure 200. The structure 200 may be, for example, a platform made for the installation of the load receiving device, a roof of a building as illustrated in FIG. 64 and FIG. 65, a moving object (vehicle, vessel, etc.) 300, a device such as a utility pole, streetlight, or signal, etc. The structure 200 may have the necessary strength for the operation of the load receiving device. In other words, the structure 200 need only be strong enough for the operation of the load receiving system.

Depending on the configuration of the structure to which the load receiving device 50 is connected, it may be equipped with the role of a load receiving part 51 that places or grasps 60 loads. For example, when connecting to a moving object, an autonomous transport robot (AGV, AMR), the load receiving device can comprise no load receiving part if the moving object 300 has the same function as the load receiving part 51, which is to grasp and move the load.

When the load receiving device 50 is installed on the roof of a building, as shown in FIG. 64, it is easier to pull loads into the living space, unlike when the device is installed on other structures.

When restricting the movement of the flight body 100 using a method of gripping or holding down the restricted part 70, the restricting part 52 may be made of a material with a high coefficient of friction, such as rubber or silicone, for example, to improve the gripping force with the restricted part 70.

As illustrated in FIG. 59 - FIG. 63, the load receiving part 51 provided by the load receiving device 50 may be equipped with a surface on which a load 60 can be stably placed or a mechanism that can grasp the load 60. Furthermore, it may be provided with adjustment means for adjusting the position of the load 60 to an optimal position, or movement means 55 (e.g., lifting device, conveyor, etc.) for moving the mounted load. Even if the load receiving device 50 is installed outdoors or at a distance from a person's living space, the movement means 55 can be used to set up more places for a person to receive a load, such as indoors.

When the load receiving part 51 comprises an arm or the like equipped with a rotating axis, for example, the load receiving part 51 can be movable to accept a load even when the load 60 is connected to the center or upper side of the flight body 100. This allows for greater flexibility in the position of the connection of the load 60 to the flight body 100.

If the load receiving part 51 is provided outdoors, there is a possibility that the load 60 may be moved by the wind, and may be moved outside out of the load receiving part 51 or tilted. To prevent this, for example, the load receiving part 51 may be provided with a mechanism to hold or enclose the load.

Autonomous controlled flight bodies have recently been considered and implemented for use in various industries (e.g., inspection, survey, photography, surveillance, agriculture, disaster prevention, etc.). The ability to receive and deliver loads from a flight body at a location unaffected by ground effects improves reliability and is expected to be used not only for general courier services, but also for delivery of goods by flight bodies in times of disaster or emergency.

It is possible to comprise more than one flight body in the form of a flight body. It is desirable to comprise a suitable configuration in accordance with the cost of manufacturing the flight body and the environment and characteristics of the place where the flight body will be operated.

The above mentioned embodiments are merely examples to facilitate understanding of the disclosure and are not intended to limit or interpret the disclosure. It goes without saying that the present disclosure may be changed and improved without departing from its intent, and that the present disclosure includes equivalents thereof.

### [DESCRIPTION OF REFERENCE NUMERALS]

10 Suspension materials
11 Mounted load, load
12 Rotating axis
13 Suspension movement means
14 Winding machine/winder
30 Position restriction device
31 Guide section
32 Restricting member
33 Containment space (enclosed space)
34 Rotation axis
40 Load receiving part
50 Load receiving device
51 Load receiving part
52 Restricting part
55 Means of movement
60 Mounted load, load
61 Detachable means
70 Restricted part
71a-71b Joint parts
100 Flight body
110a-110f Propellers
111a-111f Motors
112 ESC
120 Frame
121 Main body part
200 Structure
300 Moving object
1000 Battery
1001 Flight controller
1002 Sensors
1003 Gimbals
1004 Transmission/reception unit
1006 Transceiver/Trancereceiver (radio/propo)

## Claims

1. A position restriction device for a suspension member suspended from a flight body, comprising:
a restricting member for restricting the movement of the suspended member;
a guide part for guiding the suspended member to a position at least where the movement of the suspended member can be restricted by the restricting member.

2. The position restriction device according to claim 1, further comprising:
a load receiving par tbelow the restricting member for receiving a load connected to the suspension part.

3. The position restriction device as in claim 1 or claim 2,
wherein the restricting member includes a member that grips the suspension member.

4. The position restriction device of any one of claims 1 to 3,
wherein the restricting member includes a roller portion that moves the suspension member by rotation.

5. The position restriction device of any one of claims 1 to 4,
wherein the restricting member includes a configuration to keep the suspension member within a predetermined enclosed space.

6. The position restriction device of any one of claims 1 to 5,
wherein the restricting member is provided below the guide portion.

7. The position restriction device as in any one of claims 1 to 6,
wherein the restricting member and the guide part are moveable in at least a horizontal direction.

8. The position restriction device according to claim 7,
wherein the position restriction device is provided on a structure,
wherein the position restriction device is moved horizontally such that at least a portion of the position restriction device is concealed by the structure.

9. The position restriction device as in any one of claims 1 to 8.
wherein the restricting member and the guide portion are movable at least vertically.

10. The position restriction device according to claim 9,
wherein the position restriction device includes an arm part,
wherein the arm part is movable at least vertically by movement of the arm part.

11. A load receiving system, comprising:
a load receiving device and a flight body for delivering loads,
wherein the load receiving device has a restricting part and the flight body has a restricted part,
wherein the restricting part is provided so that the restricted part can be fixed, and the flight body's movement is restricted when the restricting part is in a state where the restricting part fixes the restricted part.

12. The load receiving system according to claim 11,
wherein, in a state in which the restricting part secures the restricted part,
detachment of the load by the flight body is performed.

13. The load receiving system as in claim 11 or 12,
wherein the flight body is provided with a propeller and a motor for rotating the propeller,
wherein the motor provided by the flight body does not stop rotating in a state in which the movement of the restricted part is restricted by the restricting part.

14. The load receiving system as in any one of claims 11 to 13,
wherein the load is connected to the lower end of the restricted part.

15. The load receiving system as in any one of claims 11-14,
wherein the restricted part is a string-like member.

16. The load receiving system according to claim 15,
wherein the flight body is further provided with a winch for adjusting the suspension length of the restricted part.

17. The load receiving system as in any one of claims 11 to 14,
wherein the restricted part is a bar-shaped member.

18. The load receiving system as in any one of claims 11 to 17,
wherein the structure on which the load receiving system is installed is a roof of a building.

19. The load receiving system of any one of claims 11 or 18, further comprising:
a lifting device to transport the load received from the flight body.

20. A method of moving objects wherein a load delivered by a flight body is received by a load receiving device,
wherein the load receiving device is provided with a restricting part,
wherein the flight body is provided with a restricted part that can be physically secured by the restricting part, comprising:
a step in that the flight body carrying the load hovering near the load receiving device;
a step of restricting the flight body's movement by the restricting part fixing the restricted part;
a step of the flight body detaching the load and moving the load to the load receiving device; and
a step of releasing the restricted portion from securing the restricted portion.
